# EUROPEAN PATENT APPLICATION

(11) **EP 2 000 940 A1**
(43) Date of publication of application: **10.12.2008**
(21) Application number: 07737760.4
(22) Date of filing: 05.03.2007
(51) Int. Cl.: G06F 21/20, G06F 13/00, G06F 21/24

(54) **EQUIPMENT MONITORING DEVICE**

(30) Priority: 07.03.2006 JP 2006060857
(71) Applicant: Japan Lucida Co. Ltd., Tokyo 102-0071 (JP)
(72) Inventor: TOSHIMA, Yasufumi, California 95014 (US); KAWAI, Kazuhiro, Chigasaki-shi, Kanagawa 253-0037 (JP); HAYASHI, Satoshi, Kawagoe-shi, Saitama 350-0808 (JP)
(74) Representative: Townsend, Stephen
(86) International application number: PCT/JP2007/054162
(87) International publication number: WO 2007/102457

(57) **Abstract**

An equipment monitoring server is provided to prevent wrong acts in a local area network. An equipment monitoring server 13 is comprised of operation prohibiting means for prohibiting a computer 11 from carrying out other than authorized operations, authorized-operation-execution-history storing means for storing an authorized operation execution history when the computer 11 executes the authorized operations, unauthorized-operation-execution-history storing means for storing an unauthorized operation execution history when the computer 11 executes the unauthorized operations, and output means for outputting the authorized operation execution history and the unauthorized operation execution history.

## Description

### TECHNICAL FIELD

The present invention relates to an equipment monitoring device that monitors network constituent equipments forming a local area network in time series.

### BACKGROUND ART

There is a network security system in which a user of a network detects an unlawful intruder onto a server through the Internet and informs an Internet service provider of this detection, and the unlawful intruder is traced back in cooperation with the service provider (see Patent Document 1). This system is formed of a monitoring terminal that detects unlawful access utilizing the Internet to inform of this detection and a center terminal that specifies an access source of the detected unlawful access upon receiving notification from the monitoring terminal and informs a user of a network of information of the specified access source.

The monitoring terminal is installed in a computer system owned by a user of the network, and the center terminal is installed in a computer system owned by the Internet service provider. The monitoring terminal stores a log of accesses with respect to a server for users connected with the Internet, analyzes this log to detect unlawful access to the server for the users, and informs the center terminal of detection of the unlawful access together with the stored log. The center terminal specifies a server of the access source of the unlawful access based on the supplied information of the log, and informs the monitoring terminal of the user of information of the server of the access source.
Patent Document 1: Japanese Patent Application Laid-open No. 2005-128919

### DISCLOSURE OF INVENTION

### PROBLEM TO BE SOLVED BY THE INVENTION

In the network security system disclosed in the above publication, a user of the network does not have to specify the server of the access source of the unlawful access, and hence the user's labor and energy can be reduced. However, in this network security system, a distribution situation of various kinds of information, an outflow situation of various kinds of information, an inflow situation of various kinds of information, and others in the network cannot be grasped, and it is difficult to prevent fraudulent acts, e.g., alteration of data another user has by a user of the network or destruction of data another user has by a user of the network.

It is an object of the present invention to provide an equipment monitoring device that monitors network constituent equipments forming a local area network in time series to enable prevention of fraudulent acts in the network.

### MEANS FOR SOLVING PROBLEM

A premise of the present invention that solves the above-explained problem is an equipment monitoring device which is connected with a local area network formed of a plurality of network constituent equipments linking with each other and monitors these network constituent equipments in time series.

The present invention on the premise is characterized in that the equipment monitoring device has: operation prohibiting means for prohibiting execution of unauthorized operations other than operations authorized in the network constituent equipments; authorized-operation-execution-history storing means for storing an authorized operation execution history when the network constituent equipments execute the authorized operations; unauthorized-operation-execution-history storing means for storing an unauthorized operation execution history when the network constituent equipments execute the unauthorized operations; and output means for outputting the authorized operation execution history and the unauthorized operation execution history.

As an example of the present invention, the equipment monitoring device has encrypting means for encrypting at least the unauthorized operation execution history in the authorized operation execution history and the unauthorized operation execution history based on a predetermined encryption scheme, stores the encrypted authorized operation execution history through the authorized operation storing means, and stores the encrypted unauthorized operation execution history through the unauthorized operation storing means.

As another example of the present invention, the equipment monitoring device has authentication executing means for executing authentication of the network constituent equipments at the time of activation of the network constituent equipments.

As still another example of the present invention, the equipment monitoring device has link information managing means for managing link information of the network constituent equipments forming the local area network and storing the link information and application information managing means for managing applications installed in the network constituent equipments and storing application information, and outputs the link information and the application information through the output means.

As yet another example of the present invention, the equipment monitoring device encrypts the link information and the application information by using the encrypting means, stores the encrypted link information through the link information managing means, and stores the encrypted application information through the application information managing means.

As a further example of the present invention, the operation prohibiting means executes: a copy prohibiting function that prohibits copy-inhibited information selected from various kinds of information held by the network constituent equipment from being copied to another network constituent equipment; a printing prohibiting function that prohibits printing-inhibited information selected from various kinds of information held by the network constituent equipment from being printed; and an application use prohibiting function that prohibits an unusable application selected from various kinds of applications managed by the local area net work from being used in the network constituent equipments.

As a still further example of the present invention, the authorized operation execution history includes: an external use history when the network constituent equipment is used in an external environment other than the local area network; a use-at-overtime history when the network constituent equipment is used at overtime; and an information printing history when the network constituent equipment prints various kinds of information, and the authorized-operation storing means executes: an external-use-history storing function that stores the external use history; a use-at-overtime-history storing function that stores the use-at-overtime history; and an information-printing-history storing function that stores the information printing history.

As a yet further example of the present invention, the authorized operation execution history includes: an application use history of applications used by the network constituent equipment in various kinds of applications installed in the network constituent equipment; a file access history when the network constituent equipment accesses a file stored in another network constituent equipment; a mail transmission history of electronic mails transmitted by the network constituent equipment; and an external access history when the network constituent equipment accesses the outside of the local area network, and the authorized-operation storing means executes: an application-use-history storing function that stores the application use history; a file-access-history storing function that stores the file access history; a mail-transmission-history storing function that stores the mail transmission history; and an external-access-history storing function that stores the external access history.

As another example of the present invention, the equipment monitoring device has backup means for enabling use of an unusable application when any one of applications installed in the network constituent equipments becomes unusable.

As still another example of the present invention, the equipment monitoring device sorts the authorized operation execution history and the unauthorized operation execution history in accordance with a predetermined period and outputs the authorized operation execution history and the unauthorized operation execution history sorted in accordance with the predetermined period through the output means.

As yet another example of the present invention, the equipment monitoring device converts the authorized operation execution history and the unauthorized operation execution history to a spreadsheet and outputs the authorized operation execution history and the unauthorized operation execution history converted to the spreadsheet through the output means.

### EFFECT OF THE INVENTION

According to the equipment monitoring device of the present invention, since the device has the operation prohibiting means for prohibiting execution of unauthorized operations other than operations authorized in the network constituent equipments, a user of the local area network cannot execute the unauthorized operations, and previously determining the unauthorized operations enables avoiding fraudulent acts in the network. Since the equipment monitoring device has the authorized-operation-history storing means for storing the authorized operation execution history of executions by the network constituent equipments, a manager of the local area network can utilize the authorized operation execution history to accurately grasp a distribution path of various kinds of information, an outflow path of various kinds of information, and an inflow path of various kinds of information, and a user of the network can reuse the past authorized operation execution history stored in the equipment monitoring device. Since this equipment monitoring device has the unauthorized-operation-history storing means for storing the unauthorized operation execution history of executions by the network constituent equipments, contents of an unauthorized operation or a user who has performed the unauthorized operation can be specified even though the unauthorized operation is carried out, thereby suppressing fraudulent acts, e.g., alteration of information or destruction of information by a user of the network. When this equipment monitoring device is used, the safe local area network can be assuredly configured.

Even if the authorized operation execution history or the unauthorized operation execution history flows out from the equipment monitoring device, the equipment monitoring device having the encrypting means for encrypting at least the unauthorized operation execution history in the authorized operation execution history and the unauthorized operation execution history based on a predetermined encryption scheme can avoid leakage of contents of the authorized operation execution history or the unauthorized operation execution history to the outside without allowing decoding of such contents. In the equipment monitoring device, since the authorized operation execution history or the unauthorized operation execution history is encrypted, contents of these histories are not altered, and validity or credibility of the contents of these histories can be assured. Even if an unauthorized operation is executed, this equipment monitoring device can specify contents of this unauthorized operation or a user who has performed the unauthorized operation, thus suppressing a fraudulent act by a user of the network.

The equipment monitoring device having the authentication executing means for executing authentication of the network constituent equipment when the network constituent equipment is activated uniquely judges whether authentication information of a user of the network is correct, and does not authorizes login to the local area network when the authentication information is not correct, thus assuredly avoiding unlawful intrusion onto the local area network based on alteration of the authentication information or diversion of the authentication information.

In the equipment monitoring device having the link information managing means for managing and storing link information of the network constituent equipments and the application information managing means for managing applications installed in the network constituent equipments and storing application information, a manager of the local area network can grasp a hardware configuration or each network constituent equipment forming the network by utilizing the link information, and the manager can grasp the applications installed in each network constituent equipment by utilizing the application information. In this equipment monitoring device, the manager of the local area network can readily perform management of operating systems or management of hard disks and can upgrade the applications installed in each network constituent equipment in a lump.

Even if the link information or the application information leaks to the outside from the equipment monitoring device, the equipment monitoring device that encrypts the link information and the application information by using the encrypting means can avoid leakage of contents of the link information or the application information to the outside without allowing decoding the contents of such information. In this equipment monitoring device, since the link information or the application information is encrypted, a link situation or utilized applications of the network constituent equipments in the local area network are not analyzed, thereby assuredly avoiding unlawful intrusion onto the local area network.

The equipment monitoring device that executes the copy prohibiting function, the printing prohibiting function, and the application use prohibiting function as the operation prohibiting means can avoid outflow of information since copying previously selected copy-inhibited information is prohibited, it can avoid taking out information since previously selected printing-inhibited information is prohibited from being printed, and it can prevent inefficiency that an unnecessary application is used in each network constituent equipment since a previously selected unusable application is prohibited from being used.

The equipment monitoring device in which the authorized operation execution history includes the external use history, the use-at-overtime history, and the information printing history and the authorized-operation storing means executes the external-use-history storing function, user-at-overtime-history storing function, and the information-printing-history can grasp a use condition of each network constituent equipment outside, grasp a use condition of each network constituent equipment in a period other than a specified period, and grasp printing information in each network constituent equipment. Since this equipment monitoring device can grasp a use condition of the network constituent equipment outside or a use condition of the network constituent equipment in a period other than a specified period, it can avoid unlawful acts, e.g., alteration of information or destruction of information by a user of the network.

The equipment monitoring device in which the authorized operation execution history includes the application use history, the file access history, the mail transmission history, and the external access history and the authorized operation storing means executes the application-use-history storing function, the file-access-history storing function, the mail-transmission-history storing function, and the external-access-history storing function can grasp a use condition of applications in each network constituent equipment and grasp a file-access condition in each network constituent equipment. Further, the equipment monitoring device can grasp a transmission condition of electronic mails in each network constituent equipment and grasp an external-access condition in each network constituent equipment. Since this equipment monitoring device can grasp the file-access condition, the electronic-mail-transmission condition, and the external-access condition, it can prevent fraudulent acts, e.g., alteration of information or destruction of information by a user of the network.

Even if an application installed in each network constituent equipment become unusable, the equipment monitoring device having the backup means for enabling use of the unusable application can back up and enable use of this application. In this equipment monitoring device, since the equipment monitoring device manages backup of applications in the local area network in a lump, a labor for uniquely managing and executing backup of the applications by each network constituent equipment can be omitted.

The equipment monitoring device that sorts the authorized operation execution history and the unauthorized operation execution history in accordance with each predetermined period and outputs the sorted histories through the output means can perform periodical analysis of authorized operations or unauthorized operations since the authorized operation execution history and the unauthorized operation execution history according to each predetermined period in units of, e.g., day, week, or month are output.

The equipment monitoring device that converts the authorized operation execution history and the unauthorized operation execution history to a spreadsheet can process these histories as data in the spreadsheet (spreadsheet software), and can use the spreadsheet software to freely process these histories or use the spreadsheet software to show these histories as various kinds of tables.

### BRIEF DESCRIPTION OF DRAWINGS

FIG. 1 is a block diagram of a local area network shown as an example;
FIG. 2 is a view of a display screen of computer authentication shown in a display;
FIG. 3 is a view showing an example of a display screen shown in the display;
FIG. 4 is a view showing an example of the display screen shown in the display;
FIG. 5 is a view showing an example of the display screen shown in the display;
FIG. 6 is a view showing an example of the display screen shown in the display;
FIG. 7 is a view showing an example of the display screen shown in the display;
FIG. 8 is a view showing an example of the display screen shown in the display;
FIG. 9 is a view showing an example of the display screen shown in the display;
FIG. 10 is a view showing an example of the display screen shown in the display;
FIG. 11 is a view showing an example of the display screen shown in the display;
FIG. 12 is a view showing an example of the display screen shown in the display;
FIG. 13 is a view showing an example of the display screen shown in the display;
FIG. 14 is a view showing an example of the display screen shown in the display;
FIG. 15 is a view showing an example of the display screen shown in the display;
FIG. 16 is a view showing an example of the display screen shown in the display;
FIG. 17 is a view showing an example of the display screen shown in the display;
FIG. 18 is a view showing an example of the display screen shown in the display;
FIG. 19 is a view showing an example of the display screen shown in the display;
FIG. 20 is a view showing an example of the display screen shown in the display;
FIG. 21 is a view showing an example of the display screen shown in the display;
FIG. 22 is a view showing an example of the display screen shown in the display;
FIG. 23 is a view showing an example of the display screen shown in the display;
FIG. 24 is a view showing an example of the display screen shown in the display;
FIG. 25 is a view showing an example of the display screen shown in the display;
FIG. 26 is a view showing another example of the display screen shown in the display;
FIG. 27 is a view showing still another example of the display screen shown in the display;
FIG. 28 is a view showing yet another example of the display screen shown in the display;
FIG. 29 is a view showing a further example of the displays screen shown in the display;
FIG. 30 is a view showing a still further example of the display screen shown in the display; and
FIG. 31 is a view showing a yet further example of the display screen shown in the display.

### EXPLANATIONS OF LETTERS OR NUMERALS

10 local area network
11 client computer (network constituent equipment)
12 management computer (network constituent equipment)
13 equipment monitoring server (equipment monitoring device)
14 business management server (network constituent equipment)

### BEST MODE(S) FOR CARRYING OUT THE INVENTION

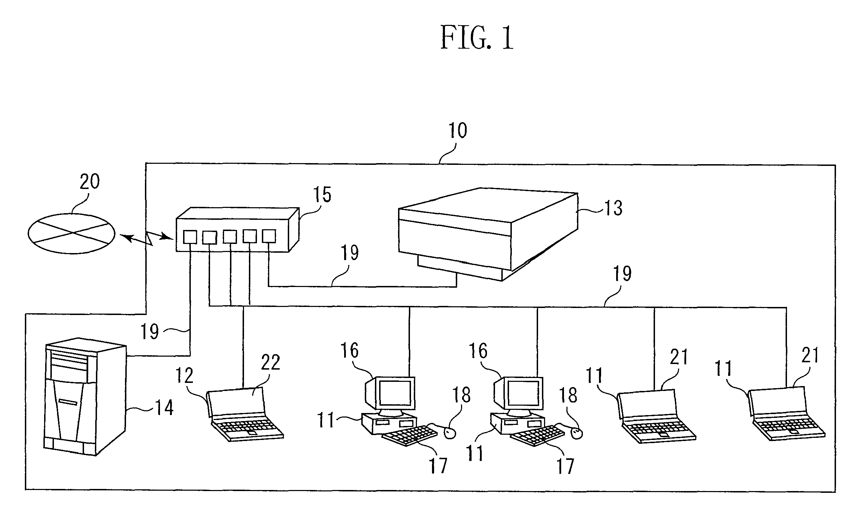

Referring to the accompanying drawings, a detailed explanation of an equipment monitoring device according to the present invention is as follows. FIG. 1 is a block diagram of a local area network 10 (an LAN) shown as an example. The local area network 10 is formed of a plurality of client computers 11 (network constituent equipments), a management computer 12 (a network constituent equipment) managed and stored by a manager of the network 10, an equipment monitoring server 13 (an equipment monitoring device) that monitors these client computers 11, a business management server 14 (a network constituent equipment), and a hub 15 (a network constituent equipment). It is to noted that, although not shown, to this network 10 is connected a server group (network constituent equipments) including, e.g., a DNS server that sets association of a host name with an IP address allocated to this host name, a Web server required to release a web page to the public, a database server that provides a function of reading and writing various kinds of data (various kinds of information) upon receiving a request from any other client computer 11 or any other server, a mail server for transmission/reception of electronic mails, or a document server that stores all data such as a created text or image and enables retrieving such data.

A desktop type or a notebook type computer is used as the client computer 11. A display 16, a keyboard 17, or a mouse 18 is connected with the desktop type computer 11 through an interface. Although not shown, a printer (a network constituent equipment), a scanner (a network constituent equipment), and an external hard disk (a network constituent equipment) are connected with each of these client computers 11 through interfaces. A removable disk (a network constituent equipment), a PDA (a network constituent equipment), and a mobile phone (a network constituent equipment) can be detachably connected with each of these client computers 11, thereby exchanging various kinds of data between these members.

The respective network constituent equipments 11, 12, and 14 or the equipment monitoring server 13 forming the local area network 10 are coupled with each other through a high-speed broadband line 19 with the hub 15 interposed therebetween. The client computers 11, the management computer 12, or the equipment monitoring server 13 can be connected with the Internet 20. It is to be noted that this network 10 adopts a bus type, but it can likewise adopt a star type or a ring type as well as the bus type. Furthermore, as a data transmitting/receiving method of this network 10, a client-server model where each client communicates with a server is adopted, but a peer-to-peer model where clients communicate with each other without a server may be employed.

In this local area network 10, the equipment monitoring server 13 monitors the network constituent equipments, e.g., the client computers 11, the management computer 12, or the business management server 14 in time series from past to present. The equipment monitoring server 13 or the business management server 14 is a computer that has a central processor and a memory and also has a high-capacity hard disk mounted thereon. A high-capacity external hard disk (not shown) is connected with the equipment monitoring server 13 through an interface. The equipment monitoring server 13 activates a program stored in a command file based on control by an operating system and executes each of the following means in accordance with the program. The business management server 14 has charge of, e.g., management of applications downloaded to the respective client computers 11, schedule management of the respective client computers 11, power management of the network 10, and others.

The equipment monitoring server 13 stores link information while managing the link information of these network constituent equipments (link information managing means). As the link information, there are hardware data forming the local area network 10, network topology data of hardware, hard disk data of the network constituent equipments, and others. These pieces of link information are stored in the hard disk of the equipment monitoring server 13 together with link information fixed dates and hours. It is to be noted that, when the hardware, the network topology, the hard disk, or the like is changed, data stored in the hard disk of the equipment monitoring server 13 is rewritten, and changed latest data and a rewriting date and hour are stored. However, the data before rewriting is stored in the external hard disk without being erased. A manager of the network 10 can utilize the link information to grasp a hardware configuration or each network constituent equipment forming the network 10, thereby easily performing management of the operating system or management of the hard disk.

The equipment monitoring server 13 authenticates the respective computers 11 and 12 at the time of activation of these computers 11 and 12 (authentication executing means). In authentication, whether the respective computers 11 and 12 can be logged into this local area network 10 to enable use of the computers 11 and 12 is judged. Although an authentication scheme performed by the equipment monitoring server 13 is password authentication, it is also possible to carry out fingerprint authentication, voiceprint authentication, retina authentication, and IC card authentication as well as the password authentication. It is to be noted that a one-time password can be adopted as the password authentication.

When authentication information is correct and an authentication result is appropriate, the equipment monitoring server 13 allows the computers 11 and 12 to log into the network 10 and stores an ID number and a login date and hour of each of the logged-in computers 11 and 12 in the hard disk. When the authentication result is inappropriate, the equipment monitoring server 13 prohibits the computers 11 and 12 from logging into the network 10 and displays a login disabled message about the computers 11 and 12 in displays 16 and 21. The equipment monitoring server 13 stores an ID number, authentication result inappropriateness, and a date and hour of each of the computers 11 and 12 having inappropriate authentication results in the hard disk. This network 10 executes authentication of these computers 11 and 12 at the time of activation of the computers 11 and 12 by the equipment monitoring server 13, and prohibits these computers 11 and 12 from logging into the network 10 when authentication information of a user of the network 10 is incorrect, thereby avoiding unlawful intrusion onto the network 10 based on alteration of the authentication information or diversion of the authentication information.

The equipment monitoring server 13 stores application information while managing applications installed in the computers 11 and 12 (application information managing means). The equipment monitoring server 13 manages an application that should be downloaded to client computer 11 from the business management server 14, and outputs authorization or unauthorization of downloading the application to the business management server 14. When an application download request is issued to the business management server 14 from the client computer 11, the business management server 14 inquires of the equipment monitoring server 13 authorization of download. When the equipment monitoring server 13 judges that the application can be downloaded, it outputs a command of downloading the application to the client computer 11 to the business management server 14, and the business management server 14 downloads a predetermined application to the computer 11. When the application is downloaded to the client computer 11 from the business management server 14, the equipment monitoring server 13 stores an ID number of the computer 11 having the application downloaded thereto, application information (information of the downloaded application), and a download date and hour in the hard disk (application information managing means). The manager can utilize the application information to grasp the application installed in each computer 11.

When the application installed in each of the computers 11 and 12 must be upgraded, the equipment monitoring server 13 outputs a upgrade command for the application to the business management server 14. The business management server 14 downloads the upgraded application to the computer 11 based on the upgrade command from the equipment monitoring server 13. When the upgraded application is downloaded to the client computer 11 from the business management server 14, the equipment monitoring server 13 stores an ID number of the computer 11 having the application downloaded thereto, application information (application information before upgrade and application information after upgrade), and an upgrade date and hour in the hard disk (application information managing means). In this network 10, applications installed in these computers 11 can be upgraded in a lump.

When an application installed in the client computer 11 becomes unusable for some reason (including a case where it cannot be activated), the equipment monitoring server 13 executes backup for enabling use of the unusable application (backup means). When a signal indicative of the unusable application is input to the equipment monitoring server 13 from the client computer 11, the equipment monitoring server 13 retrieves the unusable application by using the application information managing means and prohibits the business management server 14 from downloading the same application as the retrieved application. The business management server 14 uninstalls the unusable application from the computer 11 and downloads a new application to the computer 11 based on the command from the equipment monitoring server 13. The equipment monitoring server 13 stores an ID number of the computer 11 having the new application downloaded thereto, application information (information of the unusable application and information of the new application), and a backup date and hour in the hard disk (the application information managing means). In this network 10, since the equipment monitoring server 13 manages backup of applications in a lump, a labor for unique management and execution of backup of the applications by the respective computers 11 can be omitted.

The equipment monitoring server 13 prohibits execution of unauthorized operations other than operations authorized for these client computers 11 (operation prohibiting means). As a specific example of the operation prohibiting means is as follows. The equipment monitoring server 13 selects an unusable application from various kinds of applications stored in the business management server 14 and prohibits the selected unusable application from being downloaded to the client computers 11 (an application-use prohibiting function in the operation prohibiting means). The unusable application is set in accordance with each of these computers 11, and a correspondence table of ID numbers of the respective computers 11 and unusable applications is stored in the hard disk of the equipment monitoring server 13. When a user instructs the computer 11 to download an unusable application, a message indicating that this application is an unusable application is displayed in the display 16 or 21, and a download disabled message is also displayed. The equipment monitoring server 13 stores an ID number of the computer 11 that has requested downloading the unusable application, the unusable application, and a download requested date and hour in the hard disk (unauthorized-operation-history storing means). In this network 10, usable applications that should be downloaded are set in the respective client computers 11 in advance, and these applications alone are downloaded to the computers 11.

When an unusable application has been already installed in the client computer 11, the equipment monitoring server 13 can disable activation of this unusable application in the computer 11 (an application-use prohibiting function) and uninstall the unusable application from the computer 11 (the application-use prohibiting function). The equipment monitoring server 13 instructs the business management server 14 to uninstall the unusable application. The business management server 14 uninstalls the unusable application from the computer 11 based on the command from the equipment monitoring server 13. The equipment monitoring server 13 stores an ID number of the computer 11 having the unusable application installed therein, the uninstalled unusable application, and an uninstallation date and hour in the hard disk (the unauthorized-operation-history storing means). In this network 10, utilizing the equipment monitoring server 13 enables avoiding inefficiency that unnecessary applications are used by the respective computers 11.

The equipment monitoring server 13 selects copy-inhibited data from various kinds of data (various kinds of information) held by a network constituent equipments and prohibits the selected copy-inhibited data from being copied to the other network constituent equipments (a copy prohibiting function in the operation prohibiting means). The equipment monitoring server 13 adds a flag indicative of copy inhibition to the data and sets copy guard, thereby preventing the data from being copied. When a user instructs the computer 11 to copy the copy-inhibited data to a storage medium, a message indicating that this data is copy-inhibited data is displayed in the display 16 or 21, and a copy inhibition message is also displayed. The equipment monitoring server 13 stores an ID number of the computer 11 that has requested to copy the copy-inhibited data, the copy-inhibited data, and a copy requested date and hour in the hard disk (the unauthorized-operation-history storing means). In this network 10, using the equipment monitoring server 13 enables avoiding outflow of various kinds of data.

The equipment monitoring server 13 prohibits printing printing-inhibited data selected from various kinds of data held by the network constituent equipments (a printing prohibiting function in the operation prohibiting means). The equipment monitoring server 13 adds a printing inhibition flag indicative of printing prohibition to data and transfers this data to the database server. The database server determines the data with the printing prohibition flag as the printing-inhibited data and prevents the printing-inhibited data from being printed by a printer. When a user instructs the computer 11 to print the printing-inhibited data, a message indicating that this data is printing-inhibited data is displayed in the display 16 or 21 and a printing-inhibited message is also displayed. The equipment monitoring server 13 stores an ID number of the computer 11 which has been requested to print the printing-inhibited data, this printing-inhibited data, and a printing requested date and hour in the hard disk (the unauthorized-operation-history storing means). In this network 10, utilizing the equipment monitoring server 13 enables preventing taking out various kinds of data. It is to be noted that the network constituent equipments cannot execute the unauthorized operations in this network 10. However, when fraudulent means is used to forcibly execute an unauthorized operation, the equipment monitoring server 13 stores an unauthorized operation execution history, e.g., an ID number of the network constituent equipment that has executed the unauthorized operation, contents of the unauthorized operation, a date and hour that the unauthorized operation has been executed, and others in the hard disk (the unauthorized-operation-history storing means).

The equipment monitoring server 13 stores an authorized operation execution history when the network constituent equipments execute authorized operations (authorized-operation-history storing means). A specific example of the authorized-operation-history storing means is as follows. As the authorized operation execution history, there are an external use history, a use-at-overtime history, an information printing history, an application use history, a file access history, a mail transmission history, and an external access history.

The external use history is a history when the network constituent equipments are used in an external environment other than the local area network 10. When the network constituent equipment disconnected from the network 10 is used in an external environment other than this network 10 and then this network constituent equipment is again connected with the network 10, the equipment monitoring server 13 reads an ID number of this network constituent equipment, a history of use in the external environment, and a date and hour of use from the network constituent equipment and stores the read ID number, contents of external use, and date and hour of use in the hard disk (an external-use-history storing function in the authorized-operation storing means). Additionally, when external equipments (e.g., a removal disk, a PDA, and a mobile phone) other than the network constituent equipments forming the network 10 is brought in from the outside and these external equipments are connected with this network 10, the equipment monitoring server 13 sets ID numbers specifying these external equipments, reads external-use histories from the external equipments, and stores the set ID numbers, the read contents of external use, dates and hours of connection to the network 10 in the hard disk (the external-use-history storing function in the authorized-operation storing means). A manager can utilize the external-use histories to grasp use conditions of the respective network constituent equipments outside.

The use-at-overtime history is a history when the network constituent equipment is used in a period other than a specified period. When the network constituent equipment is used during off-hours or on holidays, the equipment monitoring server 13 reads an ID number and a use history of this network constituent equipment from the network constituent equipment and stores the read ID number, contents of use at overtime, and date and hour of use in the hard disk (a use-at-overtime-history storing function in the authorized-operation storing means). The manager can utilize the use-at-overtime history to grasp a use condition of each network constituent equipment at overtime. The information printing history is a history when the network constituent equipment prints various kinds of data through the printer. In a case where each network constituent equipment prints various kinds of data through the printer, the equipment monitoring server 13 requests the database server to transfer the printed data, and stores an ID number of the network constituent equipment that has requested printing, the printed data, and a printed date and hour in the hard disk when the printed data is transferred from the database server (an information-printing-history storing function in the authorized-operation storing means). The manager can utilize the information printing history to grasp printing information in each network constituent equipment.

The application use history is a use history of an application used by the network constituent equipment in various kinds of applications installed in this network constituent equipment. When the network constituent equipment activates a predetermined application and the activated application is used, the equipment monitoring server 13 stores an ID number of the network constituent equipment that has used the application, the utilized application, and a date and hour of use in the hard disk (a utilized-application storing function in the authorized-operation storing means). The manager can utilize the use history of the application to grasp a use condition of the application in each network constituent equipment. The file access history is an access history when the network constituent equipment accesses a file stored in any other network constituent equipment. When the network constituent equipment accesses a file stored in any other network constituent equipment, the equipment management server 13 detects a fact of access and stores an ID number of the network constituent equipment that has made access, an ID number of the accessed network constituent equipment, an accessed file name, an access date and hour, and others in the hard disk (an access-file storing function in the authorized-operation storing means). The manager can utilize the file access history to grasp an access condition with respect to a file in each network constituent equipment.

The mail transmission history is a transmission history of electronic mails transmitted by the network constituent equipment. When the network constituent equipment utilizes the LAN to transmit a mail to another network constituent equipment, the equipment monitoring server 13 detects mail transmission and stores an ID number of the network constituent equipment that has transmitted the mail, an ID number of the network constituent equipment that has accepted transmission of the mail, contents of the mail, a mail address as a mail transmission destination, a mail transmission date and hour, and others in the hard disk (a mail-transmission-history storing function in the authorized-operation storing means). Further, when the network constituent equipment utilizes the Internet 20 to transmit a mail to the outside of this network 10, the equipment monitoring server 13 detects mail transmission and stores an ID number of the network constituent equipment that has transmitted the mail, a mail address as a mail transmission destination, contents of the mail, a transmission date and hour of the mail, and others in the hard disk (the mail-transmission-history storing function in the authorized-operation storing means). The manager can utilize the mail transmission history to grasp a transmission condition of electronic mails in each network constituent equipment.

The external access history is an access history when the network constituent equipment accesses the outside of this local area network 10. When the network constituent equipment utilizes the Internet 20 to access an external Web other than the local area network 10 or when the network constituent equipment uses the LAN to access another local area network other than the local area network 10, the equipment monitoring server 13 detects this access and stores an ID number of the network constituent equipment that has accessed the outside, a URL of the external Web, an IP address of the other network, and an access date and hour in the hard disk (an external-access-history storing function in the authorized-operation storing means). The manager can utilize the external access history to grasp an external access condition of each network constituent equipment.

The equipment monitoring server 13 encrypts the authorized operation execution history, the unauthorized operation execution history, the link information, or the application information based on a predetermined encryption scheme (encrypting means), and stores the encrypted history or information in the hard disk. The equipment monitoring server 13 combines the encrypted histories or information. In this network 10, since the equipment monitoring server 13 encrypts the history or the information based on the predetermined encryption scheme, even if such a history or information flows to the outside from the equipment monitoring server 13, contents of the history or the information can be prevented from leaking to the outside without being decoded. Further, since the history or the information is encrypted, contents thereof are not altered, and validity or credibility of the contents of the history or the information can be assured.

It is to be noted that an RSA encryption scheme is adopted as the encryption scheme. A specific example of encryption is as follows. When a history or information is input, the equipment monitoring server 13 generates a public key that is used to encrypt the history or information and a private key that is used to decrypt encrypted data. The private key is stored in the memory of the equipment monitoring server 13. The public key is transferred to the client computers 11 from the equipment monitoring server 13 and stored in the memory of each computer 11. Each computer 11 takes out the public key from the memory and creates an RSA algorithm by using the public key. Each computer 11 encrypts a history or information based on the RSA algorithm and transfers the encrypted history or information to the equipment monitoring server 13. When the encrypted history or information is transferred from each computer 11, the equipment monitoring server 13 stores it in the hard disk. The equipment monitoring server 13 can decrypt the encrypted history or information. The equipment monitoring server 13 takes out the private key from the memory and creates an RSA algorithm by using the private key. The private key taken out from a private key file is associated with the public key that is used when the computer 11 encrypts the history or information. The equipment monitoring server 13 decrypts the encrypted history or information based on the RSA algorithm.

It is to be noted that any one of an EPOC encryption scheme, a Rabin encryption scheme, a Diffie-Helman key distribution ElGamal encryption scheme, and an elliptic Diffie-Helman key distribution elliptic ElGamal encryption scheme as well as the RSA scheme can be used as the public key encryption scheme. As the encryption scheme, a common key encryption scheme may be solely used. As the common key encryption scheme, any one of a DES encryption scheme, an FEAL encryption scheme, an IDEA encryption scheme, an MISTY encryption scheme, an MULTI encryption scheme, and an RC2/4/5 encryption scheme can be used. Furthermore, as the encryption scheme, an MIX encryption scheme using both the public key encryption scheme (the RSA encryption scheme) and the common key encryption scheme (the DES encryption scheme) may be employed.

The equipment monitoring server 13 displays the authorized operation execution history, the unauthorized operation execution history, the link information, and the application information combined with each other in the display 22 of the management computer 12 (output means), and prints the authorized operation execution history, the unauthorized operation execution history, the link information, and the application information combined with each other through the printer connected with the management computer 12 (the output means). In this network 10, the authorized operation execution history or the unauthorized operation execution history stored in the equipment monitoring server 13 can be transferred to the management computer 12 from the server 13 and these histories can be confirmed by using the computers 11, thereby suppressing fraudulent acts, e.g., alteration of data or destruction of data by a user of the network 10.

The equipment monitoring server 13 can sort the authorized operation execution history, the unauthorized operation execution history, the link information, or the application information in accordance with a predetermined period in units of, e.g., day, week or month. When the manager specifies a predetermined period through the management computer 12, a history or information in this period is output to the management computer 12 from the equipment monitoring server 13. The history or the information sorted in accordance with the predetermined period is output to the display 22 or the printer of the management computer 12. In this network 10, the manager can appropriately perform analysis of authorized operations or unauthorized operations in each predetermined period in units of, e.g., day, week, or month, and contents of the authorized operations or the unauthorized operations can be changed based on an analysis result.

The equipment monitoring server 13 can convert the authorized operation execution history, the unauthorized operation execution history, the link information, or the application information to a spreadsheet (spreadsheet software). A history or information is processed as data on the spreadsheet software. The equipment monitoring server 13 displays the authorized operation execution history, the unauthorized operation execution history, the link information, or the application information converted to the spreadsheet software in the display 22 of the management computer 12 (the output means), and prints these histories or information converted to the spreadsheet software through the printer connected with the management computer 12 (the output means). In this network 10, the manager can utilize the spreadsheet software to freely process these histories or data, thereby displaying these histories or data in various kinds of tables. It is to be noted that the equipment monitoring server 13 transfers histories or information stored in the hard disk mounted thereon to an external hard disk after elapse of a predetermined period, and stores the histories or information in the external hard disk. A period for transferring the histories or information to the external hard disk may be set in units of week or month.

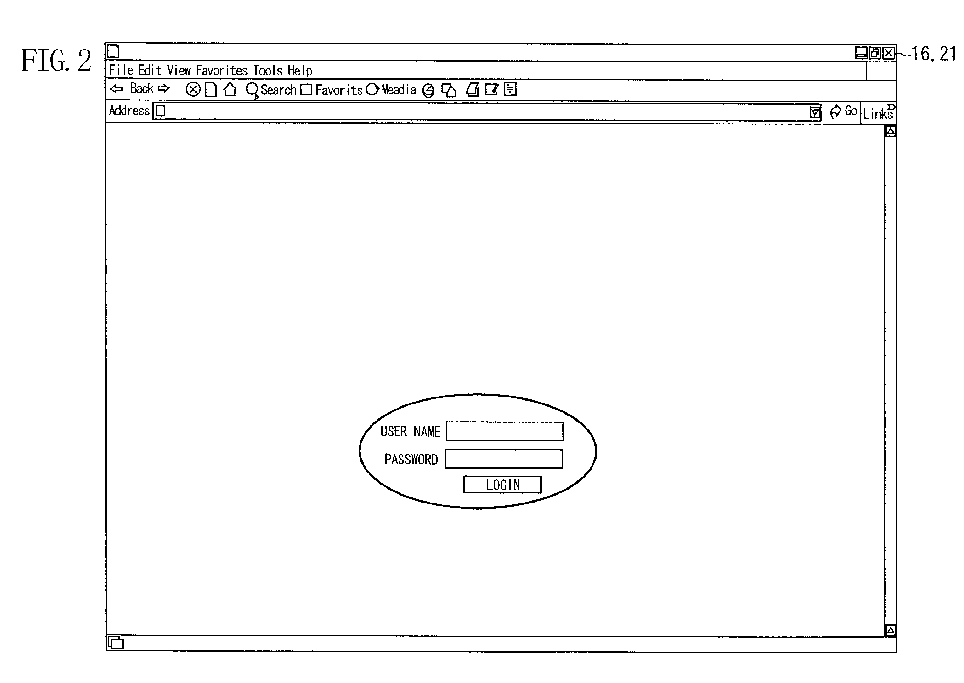

FIG. 2 is a view showing a display screen for computer authentication displayed in the display 16 or 21. When a power supply is turned on to active the computer 11, an input area for a user name and an input area for a password are displayed in the display 16 or 21 as shown in FIG. 2 (the inside of an ellipse in FIG. 2). A user of the computer 11 inputs a user name and a password in these input areas. When the user name and the password are correct, the computer 11 logs into the network 10, and an application for a special work that should be performed by using this computer 11 is activated.

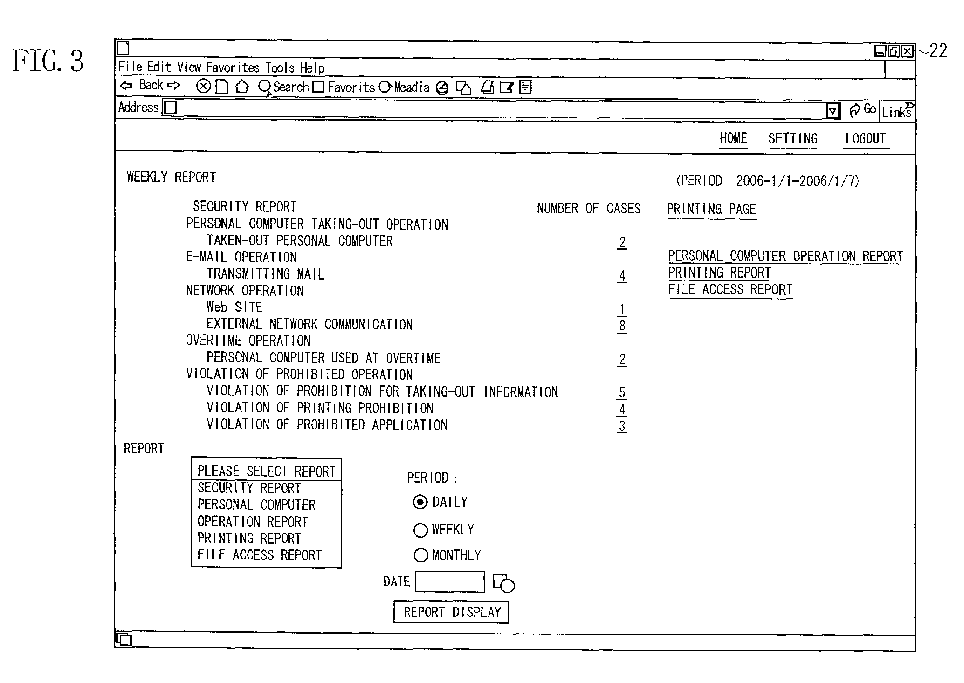

Each of FIGS. 3 to 25 is a view showing an example of a display screen displayed in the display 22 of the management computer 12. Each of FIGS. 3 to 25 shows a procedure of confirming the authorized operation execution history, the unauthorized operation execution history, the link information, or the application information in the client computer 11 through the management computer 12. The authorized operation execution history, the unauthorized operation execution history, the link information, or the application information stored in the equipment monitoring server 13 can be brought up on the management computer 12 to be displayed in the display 22 and to be printed by using the printer connected with the management computer 12. It is to be noted that authentication must be performed like the client computer 11 in order to activate the management computer 12. An authentication screen is the same as that shown in FIG. 2, and the manager of the computer 12 inputs a user name and a password in input areas as an authentication procedure. When the user name and the password are correct, the computer 12 logs into the network 10.

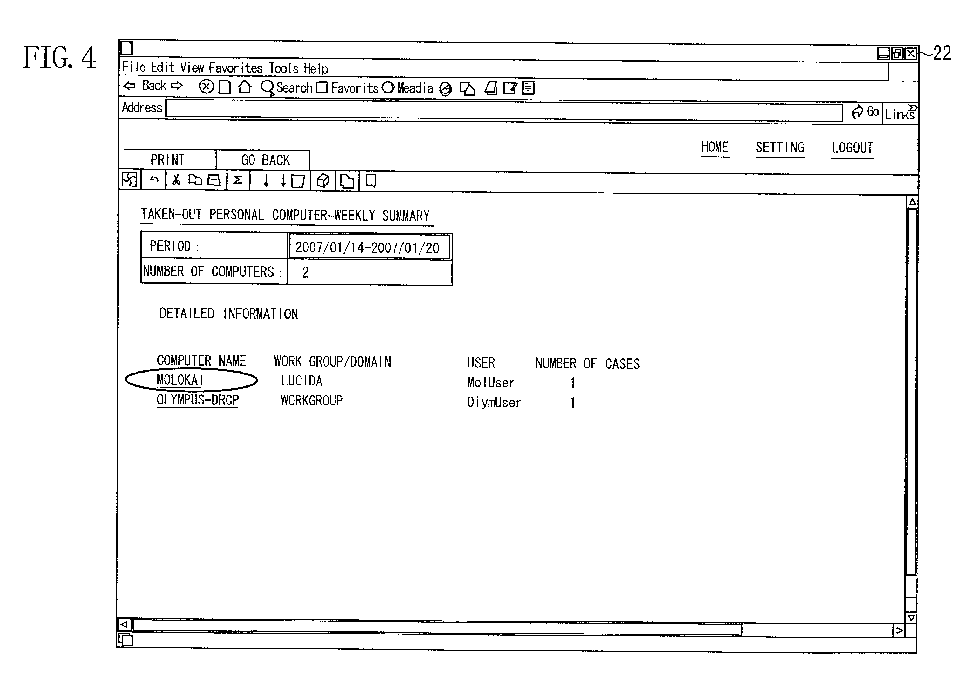

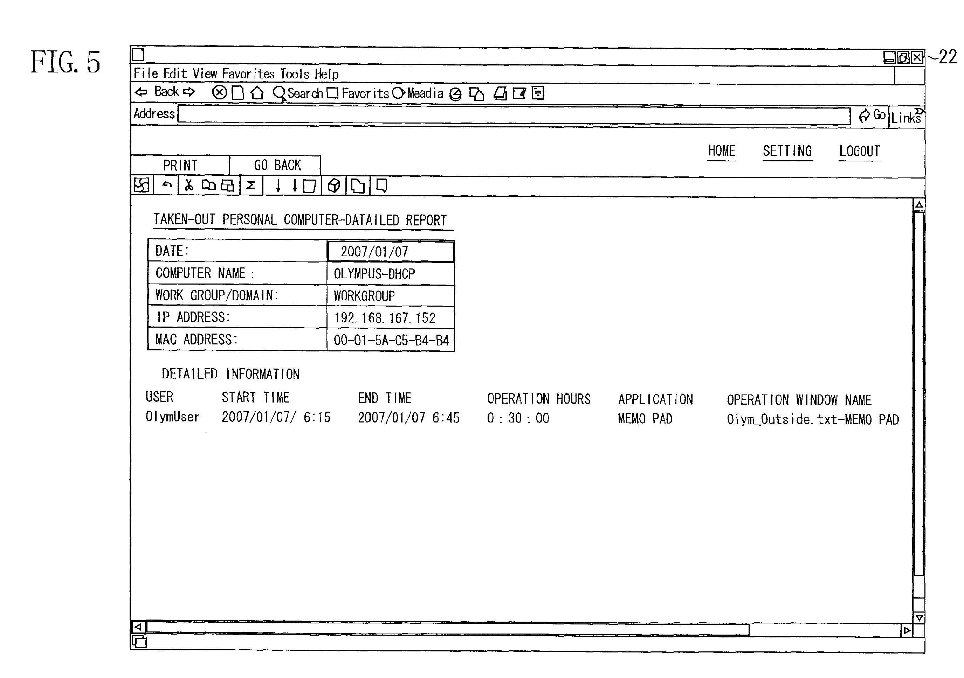

When the management computer 12 logs into the network 10 through authentication, the display 22 displays a selection screen for a security report (histories or information) as shown in FIG. 3. The manager clicks report items that should be displayed from the selection screen. To confirm a taken-out condition of the client computers 11, the manager clicks TAKEN-OUT PERSONAL COMPUTER in the report items. When TAKEN-OUT PERSONAL COMPUTER is clicked, the taken-out personal computers 11 are displayed in the display 22 (see FIG. 4). Moreover, when a specific one (the inside of an ellipse in FIG. 4) in the displayed computers 11 is clicked, taking-out data (the external use history) of the clicked computer 11 is displayed in the display 22 (see FIG. 5). The display 22 displays a retrieval date and hour, a computer name, a work group/domain, an IP address, an MAC address, and detailed information as the taking-out data. As the detailed information, a user name, a taking-out start time, a taking-out end time, operation hours, an application, and an operation window name are displayed. The manager can sort the taking-out data in accordance with a predetermined period and print it through the printer.

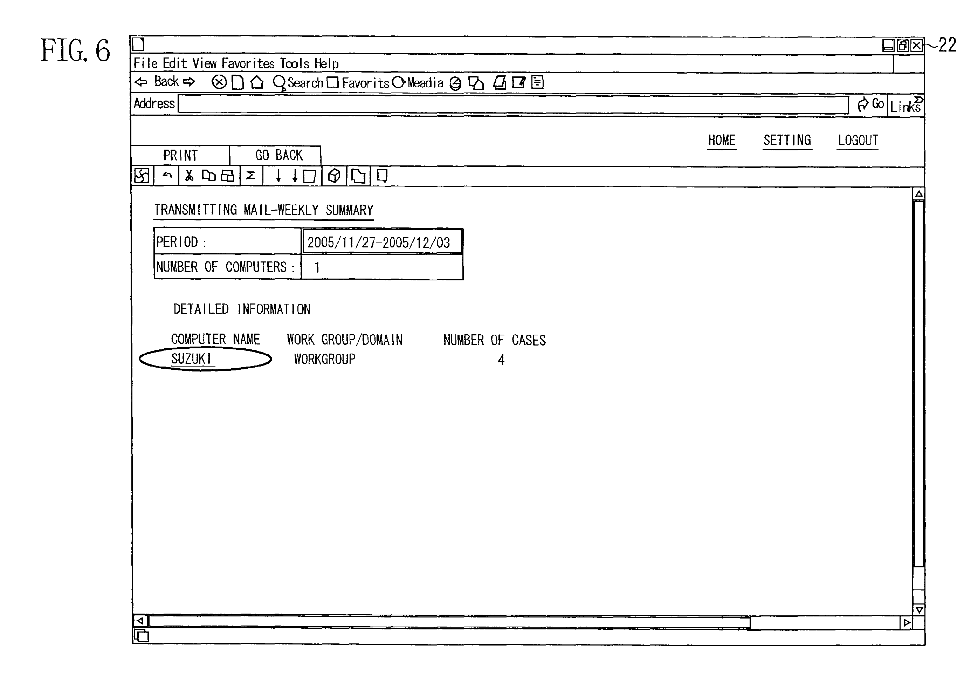

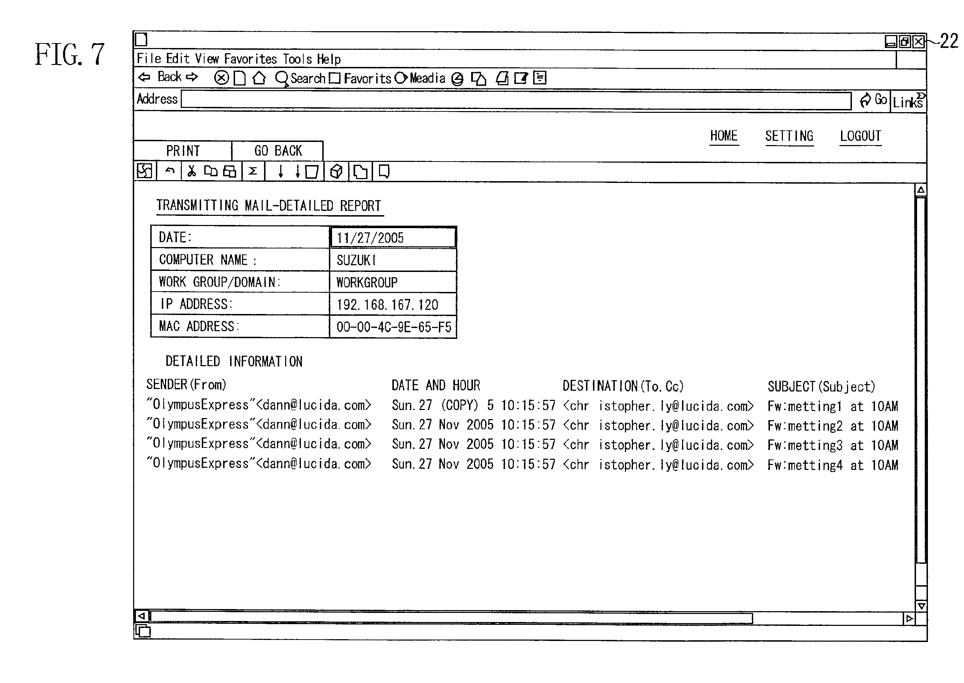

To confirm electronic mails transmitted from the client computers 11, the manager clicks TRANSMITTING MAIL in the report item as shown in FIG. 3. When TRANSMITTING MAIL is clicked, the display 22 displays the client computer 11 that has transmitted electronic mails (see FIG. 3). Additionally, when this computer 11 (the inside of an ellipse in FIG. 6) is clicked, the display 22 displays mail transmission data (the mail transmission history) of the transmitted electronic mails (see FIG. 7). The display 22 displays a retrieval date and hour, a computer name, a work group/domain, an IP address, an MAC address, and detailed information as the mail transmission data. As the detailed information, a sender, a date and hour, a destination, and a subject are displayed. The manager can sort the mail transmission data in accordance with a predetermined period to be printed through the printer.

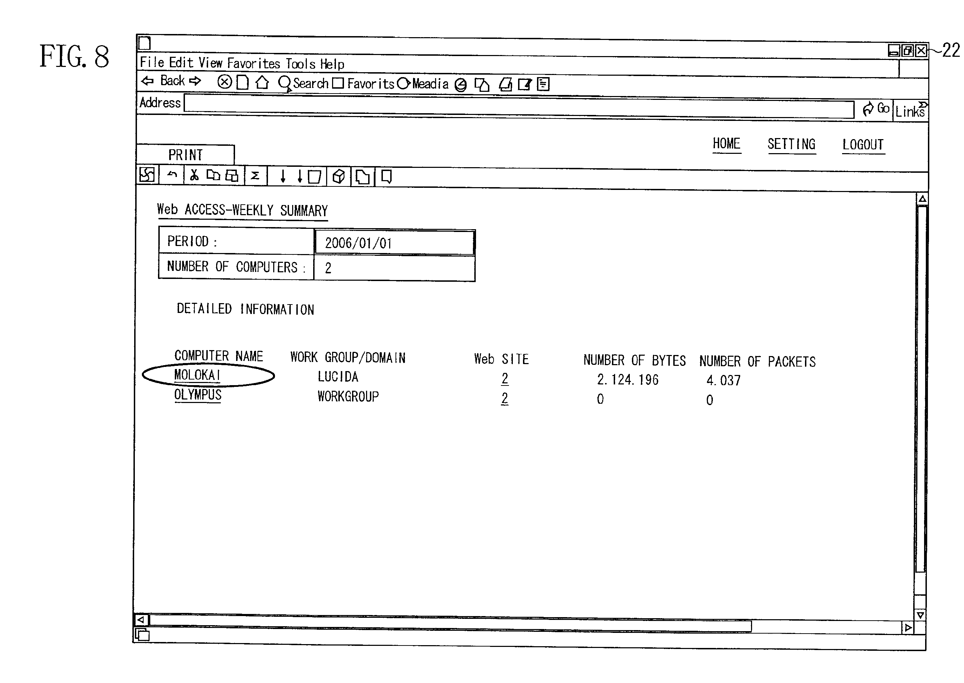

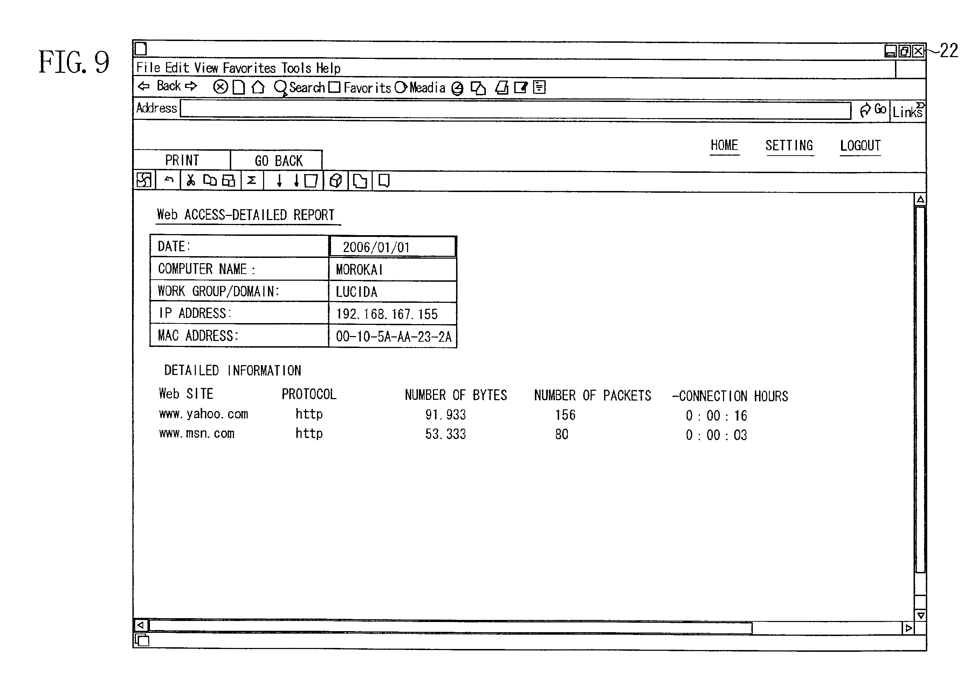

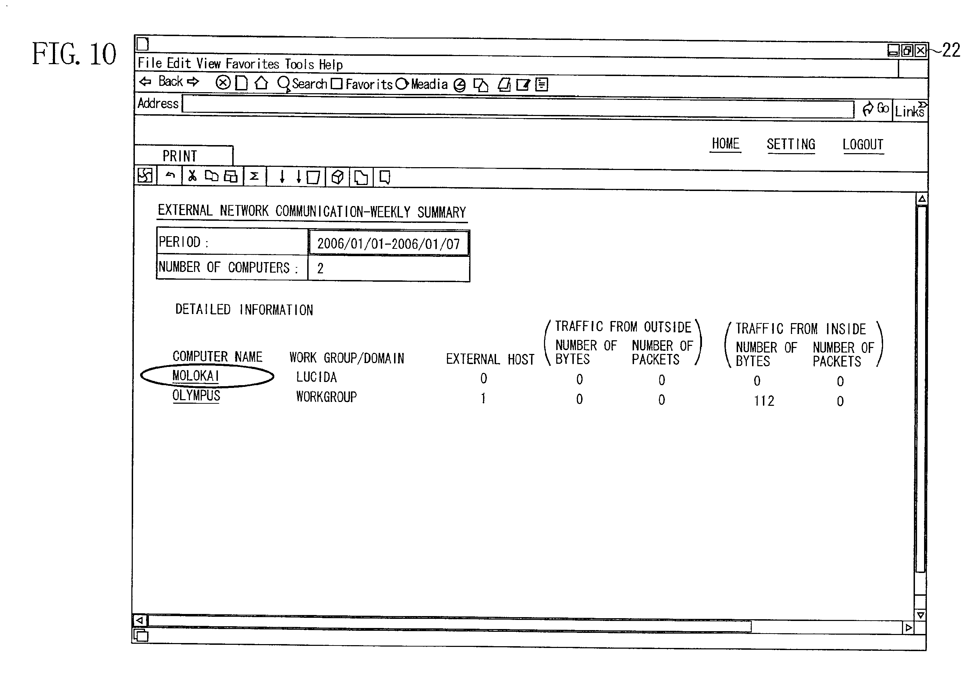

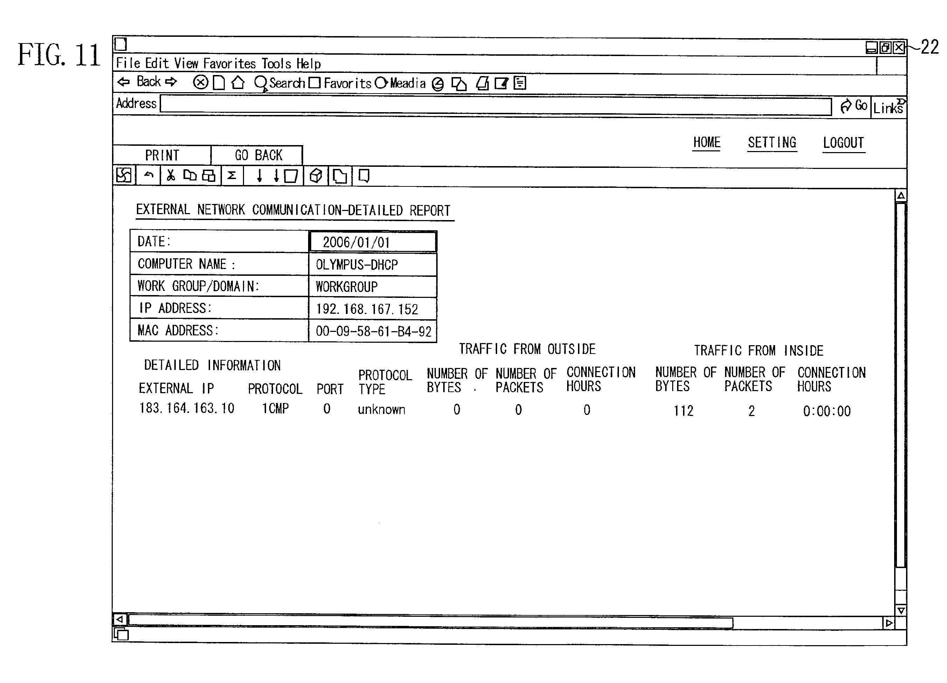

To confirm access conditions of the client computers 11 with respect to the external Web, the manager clicks Web SITE in the report items as shown in FIG. 3. When Web SITE is clicked, the client computers 11 that have accessed the external Web are displayed in the display 22 (see FIG. 8). Further, when a specific one (the inside of an ellipse in FIG. 8) in the displayed computers 11 is clicked, Web access data (the external access history) of the clicked computer 11 is displayed in the display 22 (see FIG. 9). The display 22 displays a retrieval date and hour, a computer name, a work group/domain, an IP address, an MAC address, and detailed information as the Web access data. As the detailed information, a Web site, a protocol, the number of bytes, the number of packets, and connection hours are displayed. To confirm an external network communication condition of the client computers 11, the manager clicks EXTERNAL NETWORK COMMUNICATION in the report item as shown in FIG. 3. When EXTERNAL NETWORK COMMUNICATION is clicked, the display 22 displays the computers 11 that have communicated with an external network (see FIG. 10). Furthermore, when a specific one (the inside of an ellipse in FIG. 10) in the displayed computers 11 is clicked, the display 22 displays external network communication data (the external access history) of the clicked computer 11 (see FIG. 11). The display 22 displays a retrieval date and hour, a computer name, a work group/domain, an IP address, an MAC address, and detailed information as the external network communication data. As the detailed information, an external IP, a protocol type, a port, a protocol, the number of bytes, the number of packets, and connection hours are displayed. The manager can sort the Web access data or the external network communication data in accordance with a predetermined period to be printed through the printer.

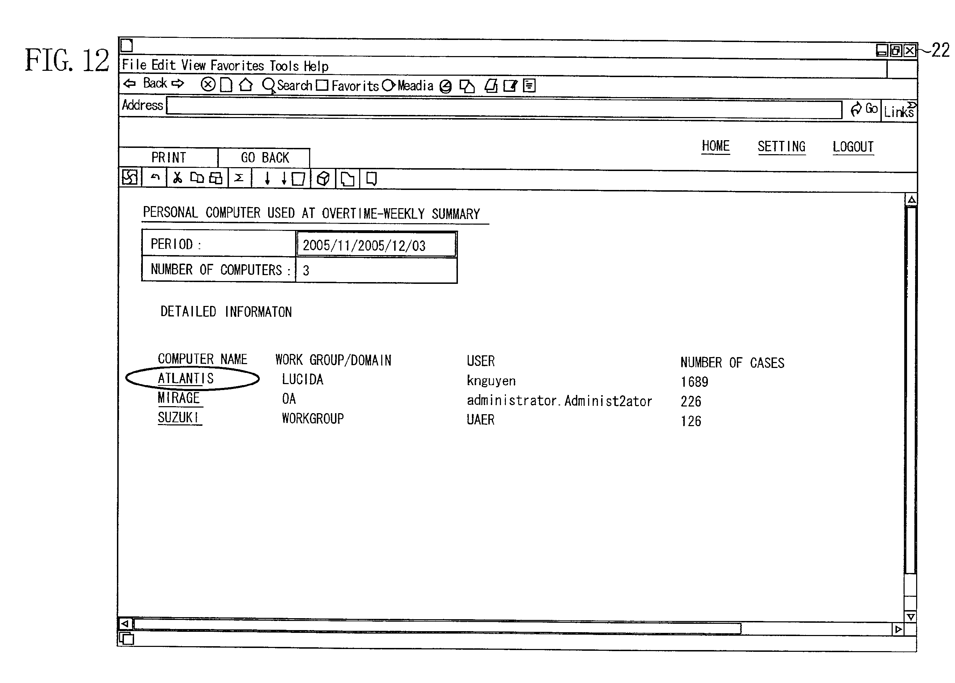

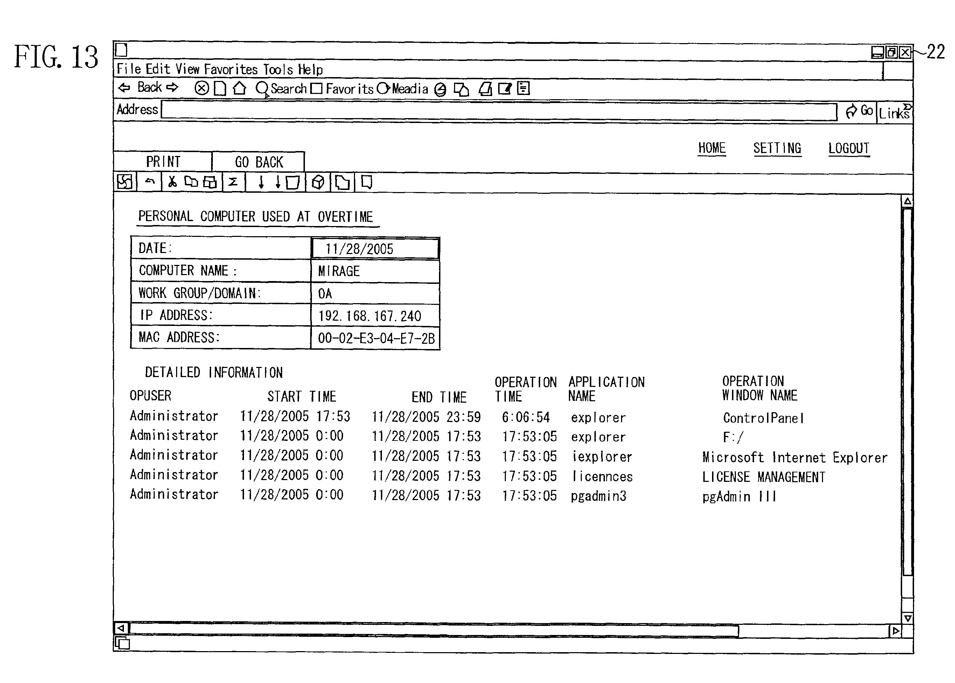

To confirm a use-at-overtime condition of the client computers 11, the manager clicks PERSONAL COMPUTER USED AT OVERTIME in the report items as shown in FIG. 3. When PERSONAL COMPUTER USED AT OVERTIME is clicked, the computers 11 used at overtime are displayed in the display 22 (see FIG. 12). Moreover, when a specific one (the inside of an ellipse in FIG. 12) in the displayed computers 11 is clicked, use-at-overtime data (the use-at-overtime history) of the clicked computer 11 is displayed in the display 22 (see FIG. 13). The display 22 displays a retrieval date and hour, a computer name, a work group/domain, an IP address, an MAC address, and detailed information as the use-at-overtime data. As the detailed information, a user name, a use-at-overtime start time, a use-at-overtime end time, operation hours, an application name, and an operation window name are displayed. The manager can sort the use-at-overtime data in accordance with a predetermined period to be printed through the printer.

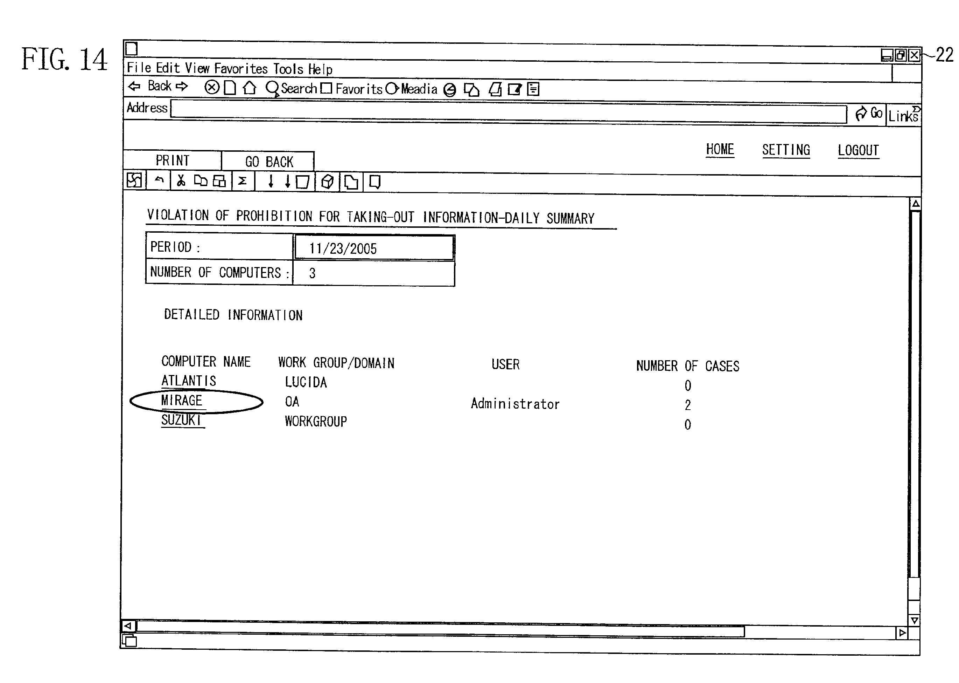

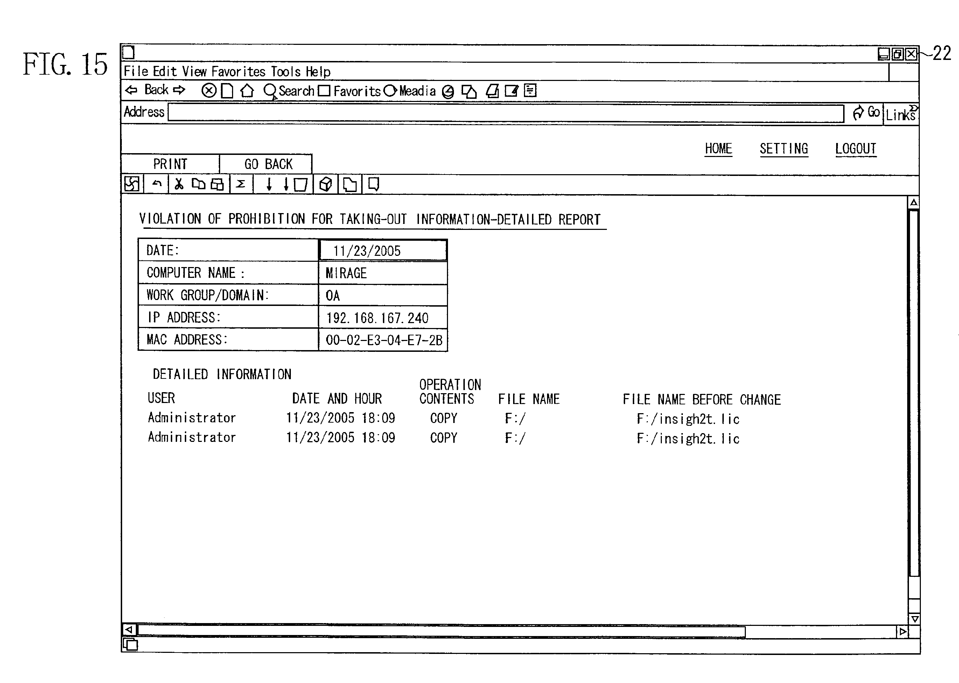

To confirm violation of prohibition for taking-out data of the client computers 11, the manager clicks VIOLATION OF PROHIBITION FOR TAKING-OUT INFORMATION in the report items as shown in FIG. 3. When VIOLATION OF PROHIBITION FOR TAKING-OUT INFORMATION is clicked, the computers 11 that have copied data prohibited from being taken out are displayed in the display 22 (see FIG. 14). Moreover, when a specific one (the inside of an ellipse in FIG. 14) in the displayed computers 11 is clicked, the display 22 displays data violating prohibition for taking out information (the unauthorized operation execution history) of the clicked computer 11 (see FIG. 15). The display 22 displays a retrieval date and hour, a computer name, a work group/domain, an IP address, an MAC address, and detailed information as the data violating prohibition for taking out information. As the detailed information, a user name, a date and hour, operation contents, a file name, and a file name before change are displayed. The manager can sort the data violating prohibition for taking out information in accordance with a predetermined period to be printed through the printer.

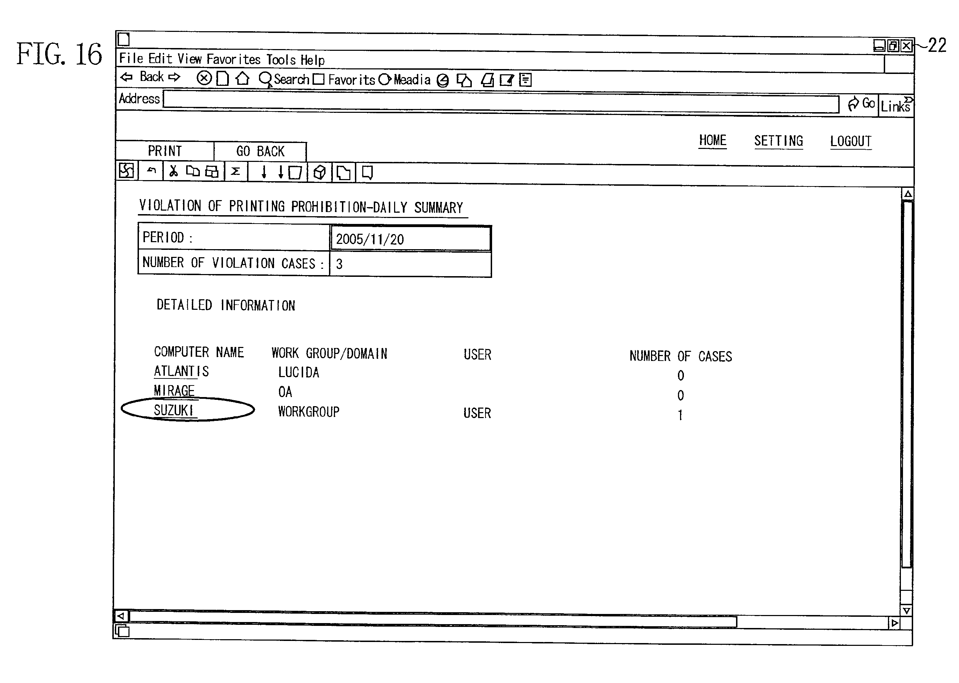

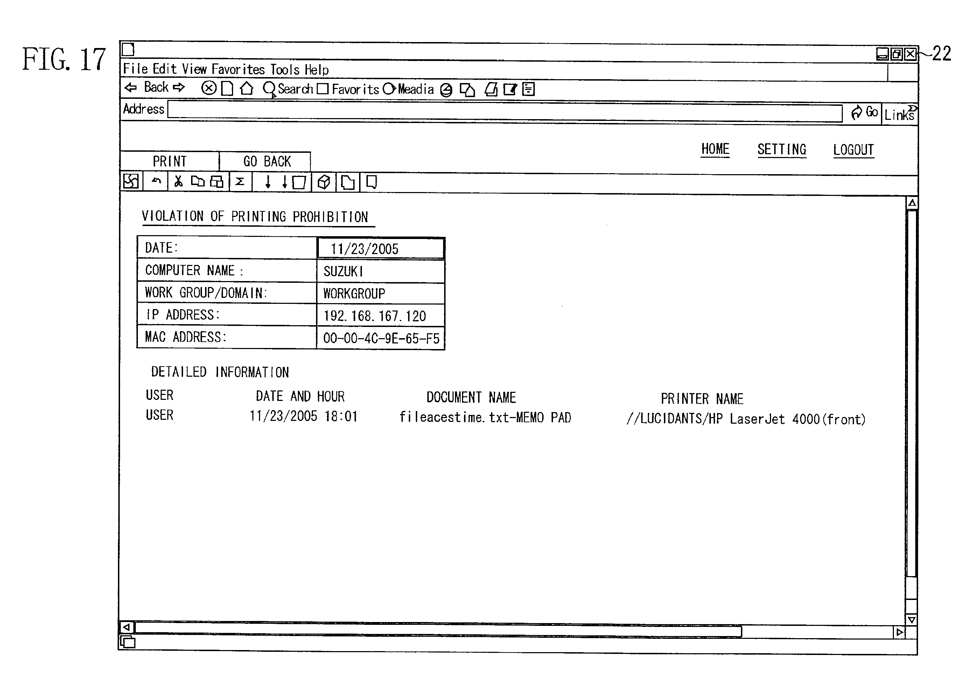

To confirm violation of data printing prohibition of the client computers 11, the manager clicks VIOLATION OF PRINTING PROHIBITION in the report items as shown in FIG. 3. When VIOLATION OF PRINTING PROHIBITION is clicked, the display 22 displays the computers 11 that have printed data prohibited from being printed (see FIG. 16). Additionally, when a specific one (the inside of an ellipse in FIG. 16) in the displayed computers 11 is clicked, the display 22 displays data violating printing prohibition (the unauthorized operation execution history) of the clicked computer 11 (see FIG. 17). The display 22 displays a retrieval date and hour, a computer name, a work group/domain, an IP address, an MAC address, and detailed information as the data violating printing prohibition. As the detailed information, a user name, a date and hour, a document name, and a printer name are displayed. The manager can sort the data violating printing prohibition in accordance with a predetermined period to be printed through the printer.

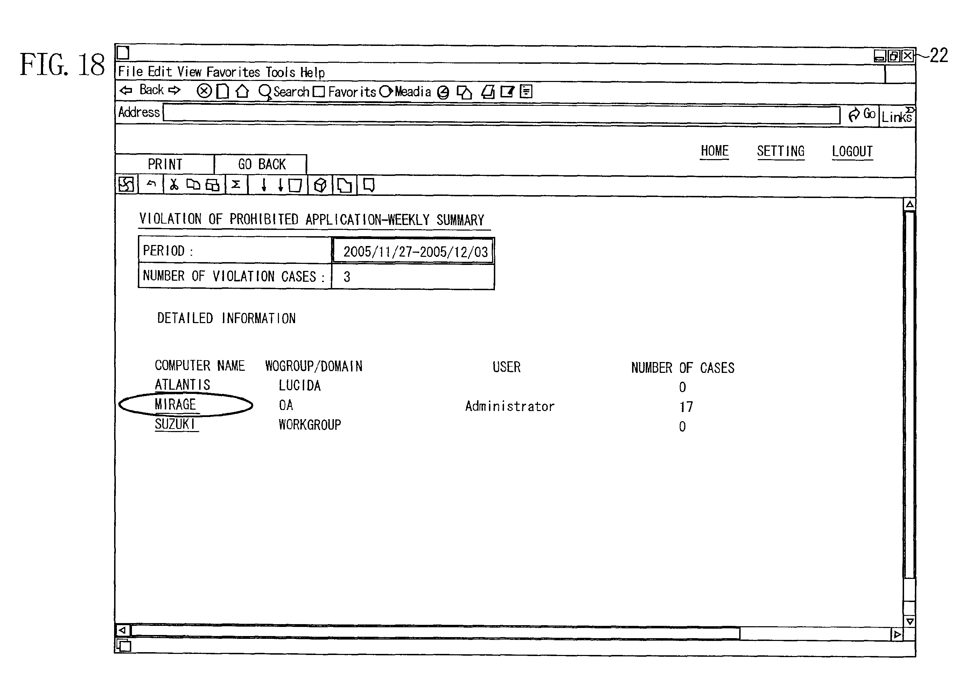

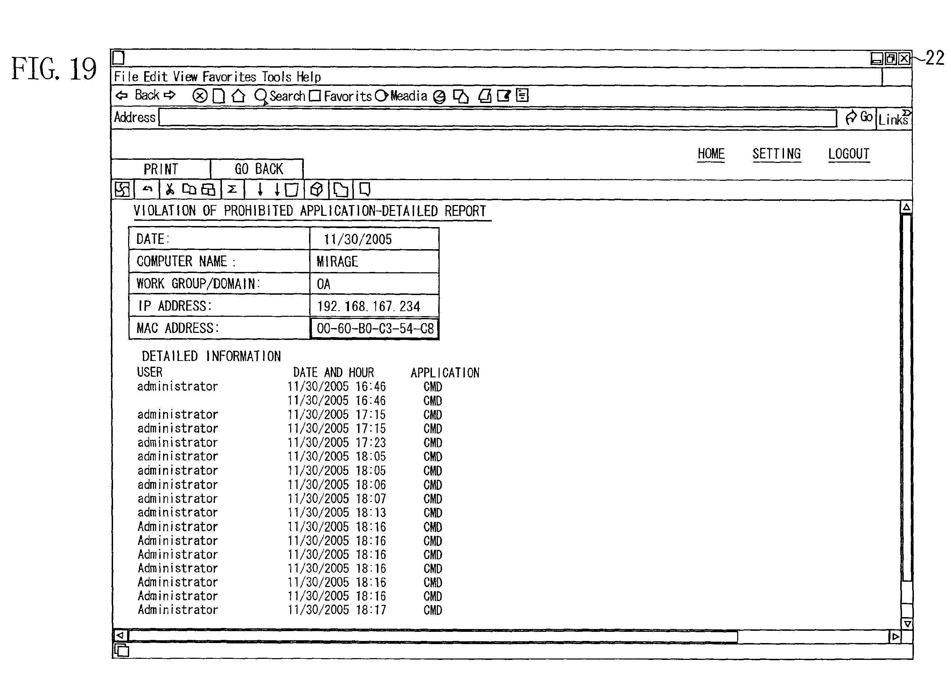

To confirm violation of prohibited applications of the client computers 11, the manager clicks VIOLATION OF PROHIBITED APPLICATION in the report item as shown in FIG. 3. When VIOLATION OF PROHIBITED APPLICATION is clicked, the display 22 displays the computers 11 that have used unusable applications (see FIG. 18). Further, when a specific one (the inside of an ellipse in FIG. 18) in the displayed computers 11 is clicked, the display 22 displays data violating prohibited applications (the unauthorized operation execution history) of the clicked computer 11 (see FIG. 19). The display 22 shows a retrieval date and hour, a computer name, a work group/domain, an IP address, an MAC address, and detailed information as the data violating prohibited applications. As the detailed information, a user name, a date and hour, and an application name are displayed. The manager can sort the data violating prohibited applications in accordance with a predetermined period to be printed through the printer.

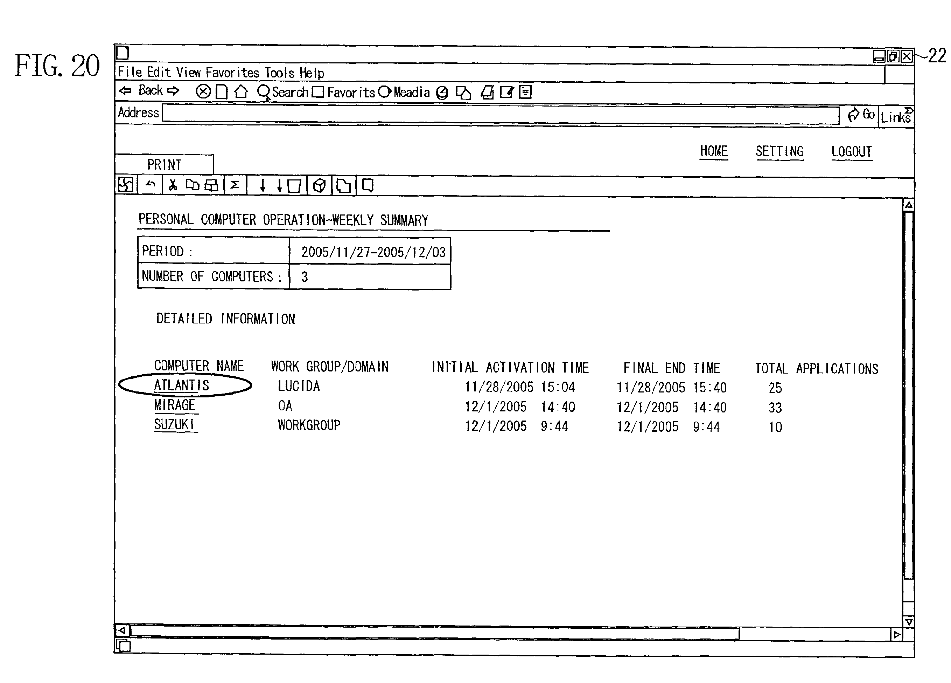

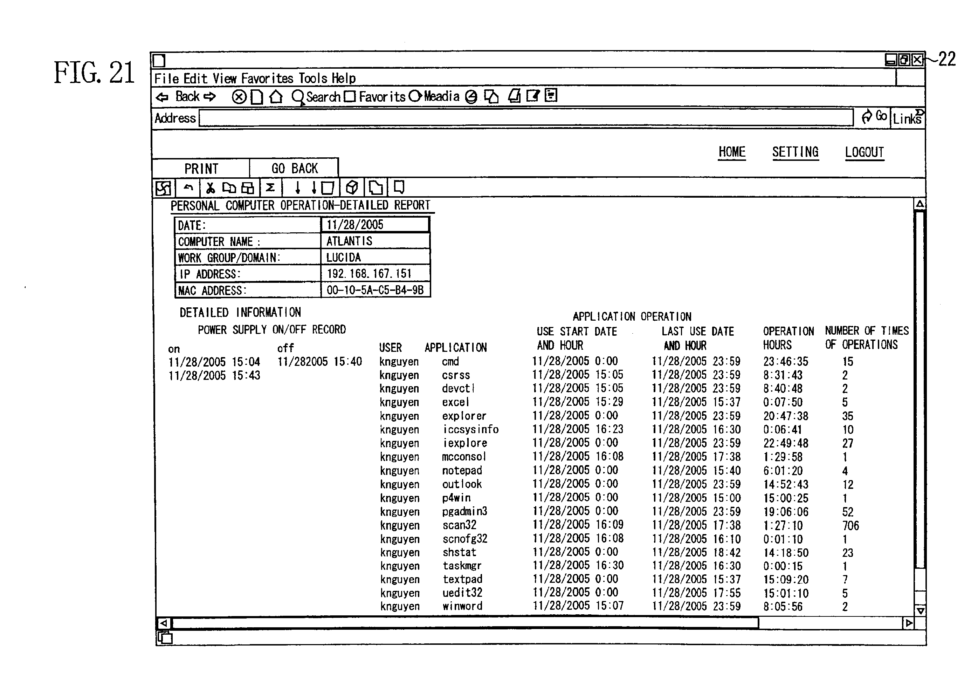

To confirm operation conditions of the client computers 11, the manager clicks PERSONAL COMPUTER OPERATION REPORT in the report items as shown in FIG. 3. When PERSONAL COMPUTER OPERATION REPORT is clicked, the display 22 shows a computer name, a work group/domain, an initial activation time, and a final end time, and first utilized data of total applications (the application use history) of each operated computer 11 (see FIG. 20). Furthermore, when a specific one (the inside of an ellipse in FIG. 20) in the displayed computers 11 is clicked, the display 22 shows second utilized data (the application use history) of the clicked computer 11 (see FIG. 21). The display 22 shows a retrieval data and hour, a computer name, a work group/domain, an IP address, an MAC address, and detailed information as the second utilized data. As the detailed information, a power supply ON/OF record, a user name, an application name, a use start date and hour, a last use date and hour, operation hours, the number of times of operations are displayed. The manager can sort the first utilized data or the second utilized data in accordance with a predetermined period to be printed through the printer.

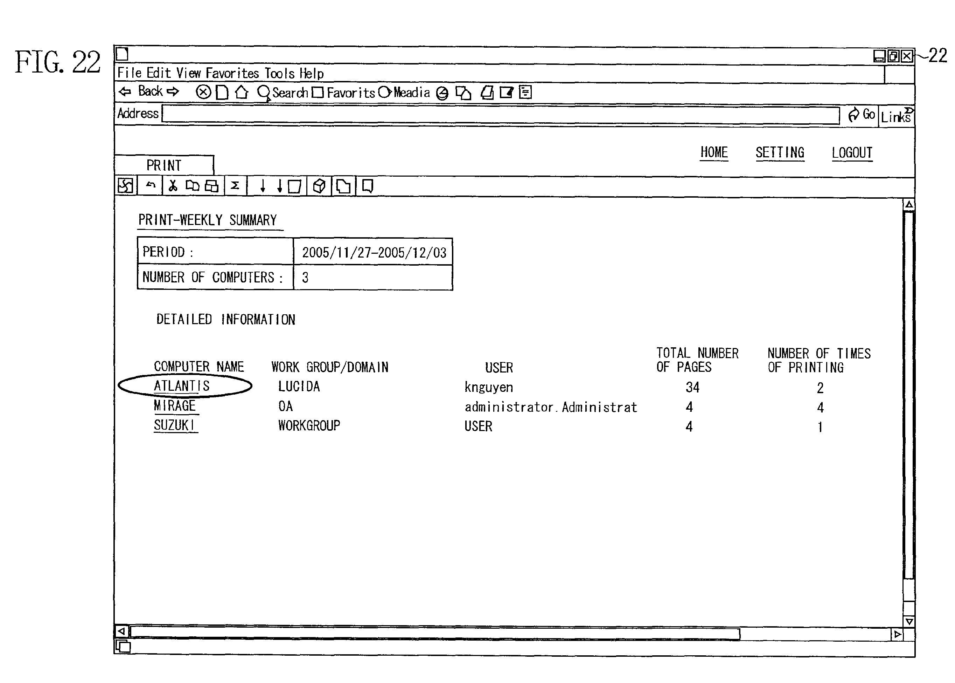

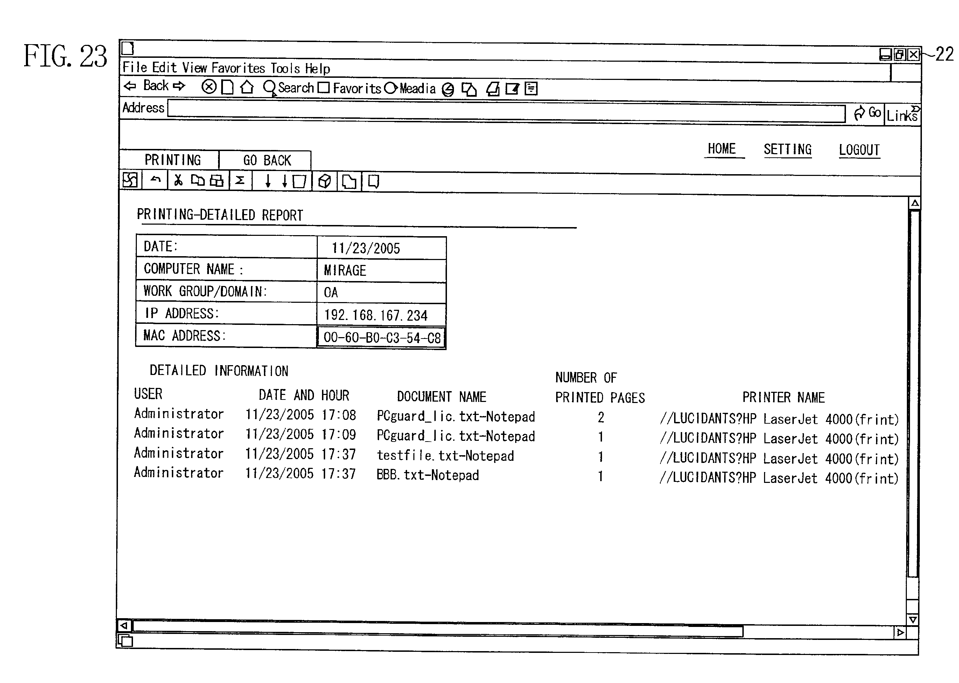

To confirm printing conditions of the client computers 11, the manager clicks PRINTING REPORT in the report items in the screen shown in FIG. 3. When PRINTING REPORT is clicked, the display 22 shows a computer name, a work group/domain, a user name, a total number of pages, and first printing data indicative of the number of times of printing (an information printing history) of each computer 11 that has performed printing (see FIG. 22). Moreover, when a specific one (the inside of an ellipse in FIG. 22) in the displayed computers 11 is clicked, second printing data (the information printing history) of the clicked computer 11 is displayed in the display 22 (see FIG. 23). The display 22 shows a retrieval data and hour, a computer name, a work group/domain, an IP address, an MAC address, and detailed information as the second printing data. As the detailed information, a user name, a date and hour, a document name, the number of printed pages, and a printer name are displayed. The manager can sort the first printing data or the second printing data in accordance with a predetermined period to be printed through the printer.

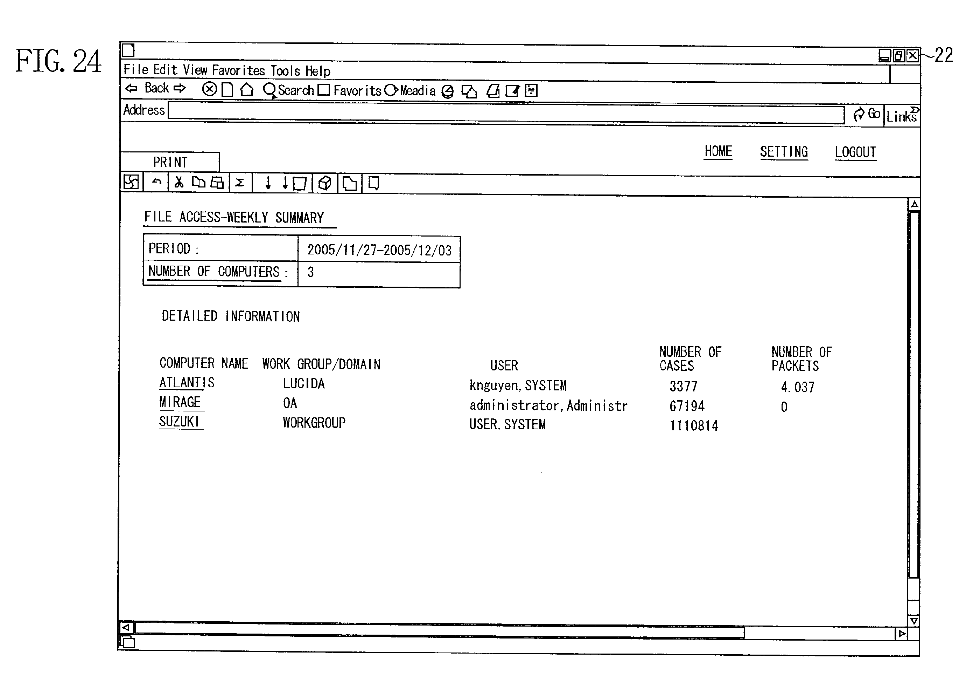

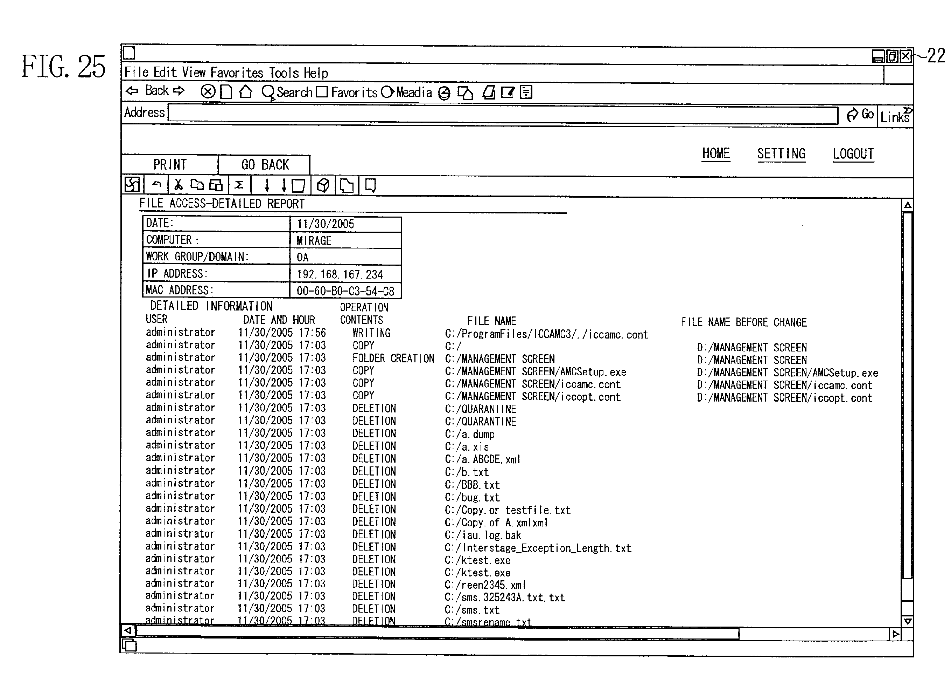

To confirm file access conditions of the client computers 11, the manager clicks FILE ACCESS REPORT in the report items as shown in FIG. 3. When FILE ACCESS REPORT is clicked, the display 22 displays first access data (the file access history) including a computer name, a work group/domain, a user name, and the number of cases of each computer 11 that has accessed a file (see FIG. 24). Further, when a specific one (the inside of an elliptic in FIG. 24) in the displayed computers 11 is clicked, the display 22 shows second access data (the file access history) of the clicked computer 11 (see FIG. 25). The display 22 displays a retrieval data and hour, a computer name, a work group/domain, an IP address, an MAC address, and detailed information as the second access data. As the detailed information, a user name, a date and hour, operation contents, a file name, and a file name before change are displayed. The manager can sort the first access data or the second access data according to a predetermined period to be printed through the printer.

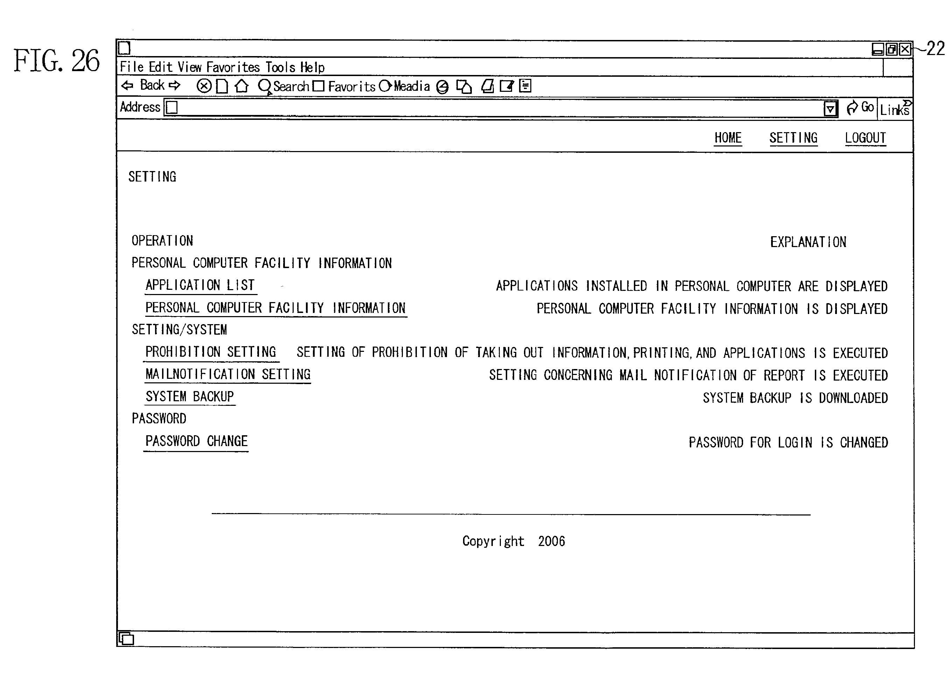

Each of FIGS. 26 to 31 is a view showing another example of a display screen displayed in the display 22 of the management computer 12. Each of FIGS. 26 to 31 shows a procedure of confirming a personal computer facility condition and a procedure of performing each setting through the management computer 12. A personal computer facility condition stored in the equipment monitoring server 13 can be brought up on the management computer 12 to be displayed in the display 22 and printed by the printer connected with the management computer 12. Furthermore, contents of each setting executed by the equipment monitoring server 13 can be set or changed through the management computer 12.

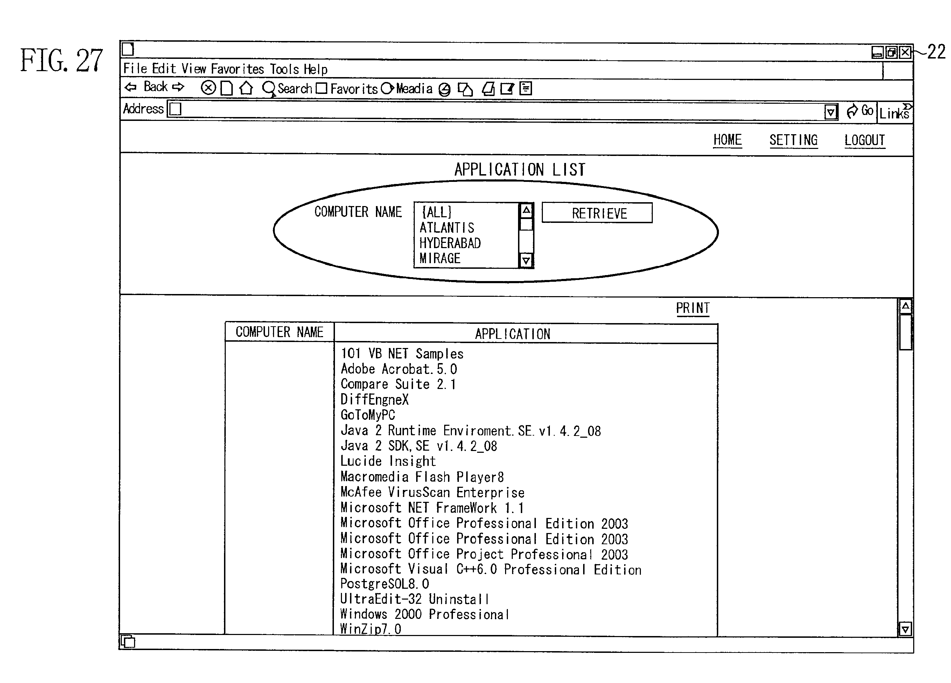

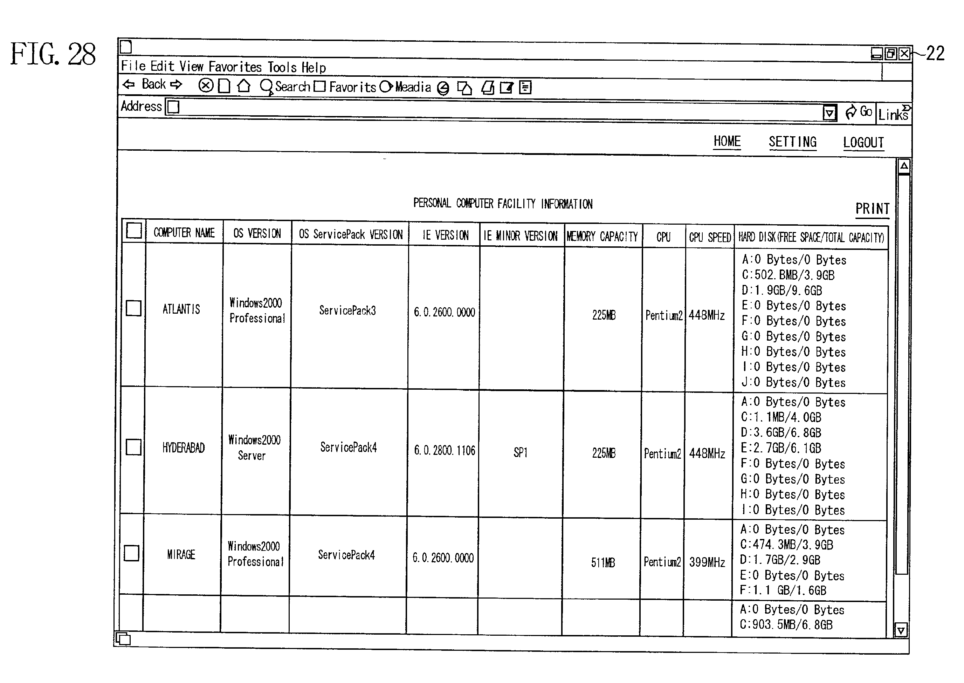

To confirm applications installed in the client computers 11, the manager clicks SETTING in the screen shown in FIG. 3. When SETTING is clicked, a setting screen is displayed in the display 22 (see FIG. 26). Then, APPLICATION LIST in respective items in the setting screen is clicked. When APPLICATION LIST is clicked, the display 22 shows each computer name (the inside of an ellipse in FIG. 27) and an application list (the application information) installed in each computer 11 (see FIG. 27). To confirm hardware forming the network 10, the manager clicks SETTING in the screen depicted in FIG. 3. When SETTING is clicked, the display 22 shows the setting screen (see FIG. 26). Then, PERSONAL COMPUTER FACILITY INFORMATION in the respective items in the setting screen is clicked. When PERSONAL COMPUTER FACILITY INFORMATION is clicked, the display 22 displays each data (the link information) including a computer name, an OS version, an OS service pack version, an IE version, an IE minor version, a memory capacity, a CPU, a CPU speed, and a free space in the hard disk as the personal computer facility information (see FIG. 28). The manager can print the application list or the personal computer facility information through the printer.

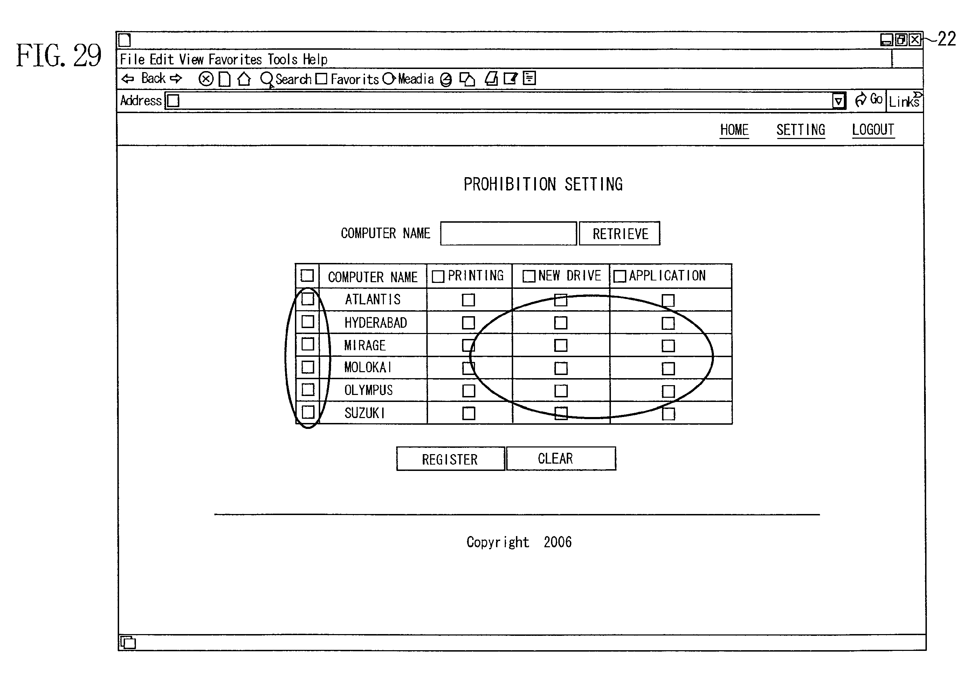

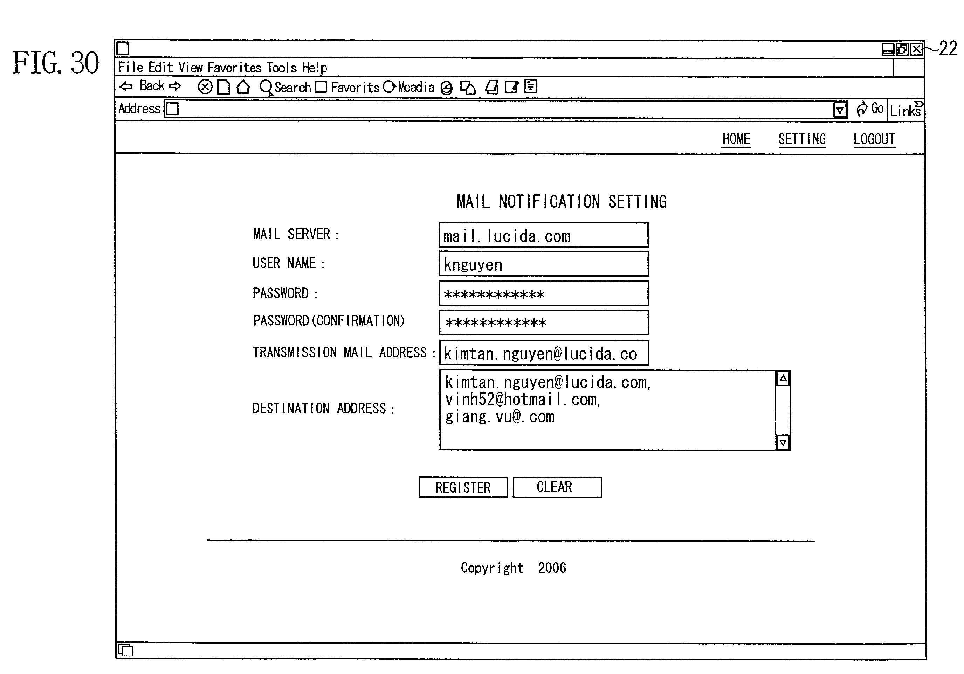

To set unauthorized operations in this network 10, the manager clicks SETTING in the screen depicted in FIG. 3. When SETTING is clicked, the setting screen is displayed in the display 22 (see FIG. 26). Then, PROHIBITION SETTING in the respective items in the setting screen is clicked. When PROHIBITION SETTING is clicked, the display 22 shows a prohibition setting screen (see FIG. 29). The manager can set unauthorized operations, change unauthorized operations, and change unauthorized operations to authorized operations in the computer 11 from the prohibition setting screen. To perform mail notification setting of the client computers 11, the manager clicks SETTING in the screen depicted in FIG. 3. When SETTING is clicked, the setting screen is displayed in the display 22 (see FIG. 26). Then, MAIL NOTIFICATION SETTING in the respective items in the setting screen is clicked. When MAIL NOTIFICATION SETTING is clicked, a mail notification setting screen is shown in the display 22 (see FIG. 30). The manager can set a mail function or change a mail function in each computer 11 from the mail notification setting screen.

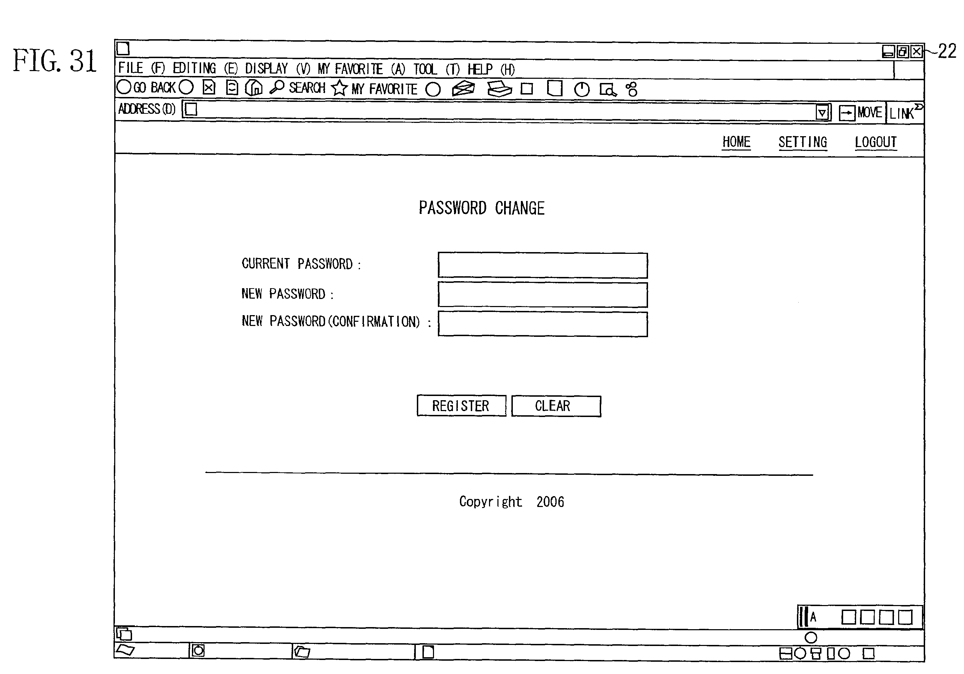

To execute system backup of the client computers 11, the manager clicks SETTING in the screen shown in FIG. 3. When SETTING is clicked, the display 22 shows the setting screen (see FIG. 26). Then, SYSTEM BACKUP in the respective items in the setting screen is clicked. When SYSTEM BACKUP is clicked, system backup is downloaded as shown in FIG. 26. The manager can back up each computer 11 based on the system backup. To change passwords of the client computers 11, the manager clicks SETTING in the screen depicted in FIG. 3. When SETTING is clicked, the display 22 shows the setting screen (see FIG. 26). Then, when PASSWORD CHANGE in the respective items in the setting screen is clicked. When PASSWORD CHANGE is clicked, the display 22 shows a password change screen (see FIG. 31). The manager can appropriately change a password in each computer 11 from the password change screen.

Although not shown, the equipment monitoring server 13 can convert the authorized operation execution history, the unauthorized operation execution history, the link information, or the application history into data in spreadsheet software. To convert these histories or information into data in the spreadsheet software, the manager clicks a spreadsheet software switch shown in the display 22. When the spreadsheet software switch is clicked, the equipment monitoring server 13 converts these histories or information into data in the spreadsheet software. The histories or information is processed as spreadsheet software data. When the equipment monitoring server 13 converts the histories or information into data in the spreadsheet software, the spreadsheet software is activated in the management computer 12, the display 22 shows a screen of the spreadsheet software, and the histories or information are displayed in respective areas of the spreadsheet software (the output means). The manager can print the spreadsheet software screen showing the histories or information through the printer connected with the management computer 12 (the output means).

Since this equipment monitoring server 13 has the operation prohibiting means for prohibiting execution of unauthorized operations other than operations authorized in the client computers 11, the unauthorized operations cannot be executed in the computers 11, and determining the unauthorized operations in advance enables avoiding fraudulent acts in the network 10. Since the equipment monitoring server 13 has the authorized operation storing means for storing the authorized operation execution history executed by the client computers 11, the manager of the local area network 10 can accurately grasp a distribution path of various kinds of data, an outflow path of various kinds of data, and an inflow path of various kinds of data by utilizing the authorized operation execution history, and a user of the network 10 can reuse the past authorized operation execution history stored in the equipment monitoring server 13. Since the equipment monitoring server 13 has the unauthorized operation storing means for storing the unauthorized operation execution history executed by the client computers 11, even if an unauthorized operation is performed, contents of this unauthorized operation or the computer 11 that has executed this unauthorized operation can be specified, whereby fraudulent acts, e.g., alteration of information or destruction of information by a user of the network 10 can be suppressed. When this equipment monitoring server 13 is used, the safe local area network 10 can be configured.

It is to be noted that the equipment monitoring server 13 displays the authorized operation execution history, the unauthorized operation execution history, the link information, or the application information in the display 22 of the management computer 12 and prints these histories or information through the printer connected with the computer 12, but the authorized operation execution history, the unauthorized operation execution history, the link information, or the application information can be transmitted to the manager who is present outside this network 10 through the Internet. In this case, these histories or information are transmitted to an URL of a server held by the external manager.

## Claims

1. An equipment monitoring device that is connected with a local area network formed of a plurality of network constituent equipments linking with each other and monitors the network constituent equipments in time series,
the equipment monitoring device comprising: operation prohibiting means for prohibiting execution of unauthorized operations other than operations authorized in the network constituent equipments; authorized-operation-execution-history storing means for storing an authorized operation execution history when the network constituent equipments execute the authorized operations; unauthorized-operation-execution-history storing means for storing an unauthorized operation execution history when the network constituent equipments execute the unauthorized operations; and output means for outputting the authorized operation execution history and the unauthorized operation execution history.

2. The equipment monitoring device according to claim 1, wherein the equipment monitoring device has encrypting means for encrypting at least the unauthorized operation execution history in the authorized operation execution history and the unauthorized operation execution history based on a predetermined encryption scheme, stores the encrypted authorized operation execution history through the authorized operation storing means, and stores the encrypted unauthorized operation execution history through the unauthorized operation storing means.

3. The equipment monitoring device according to claim 1 or claim 2, wherein the equipment monitoring device has authentication executing means for executing authentication of the network constituent equipments at the time of activation of the network constituent equipments.

4. The equipment monitoring device according to any one of claims 1 to 3, wherein the equipment monitoring device has link information managing means for managing link information of the network constituent equipments forming the local area network and storing the link information and application information managing means for managing applications installed in the network constituent equipments and storing application information, and outputs the link information and the application information through the output means.

5. The equipment monitoring device according to claim 4, wherein the equipment monitoring device encrypts the link information and the application information by using the encrypting means, stores the encrypted link information through the link information managing means, and stores the encrypted application information through the application information managing means.

6. The equipment monitoring device according to any one of claims 1 to 5, wherein the operation prohibiting means executes: a copy prohibiting function that prohibits copy-inhibited information selected from various kinds of information held by the network constituent equipment from being copied to another network constituent equipment; a printing prohibiting function that prohibits printing-inhibited information selected from various kinds of information held by the network constituent equipment from being printed; and an application use prohibiting function that prohibits an unusable application selected from various kinds of applications managed by the local area net work from being used in the network constituent equipments.

7. The equipment monitoring device according to any one of claims 1 to 6, wherein the authorized operation execution history includes: an external use history when the network constituent equipment is used in an external environment other than the local area network; a use-at-overtime history when the network constituent equipment is used at overtime; and an information printing history when the network constituent equipment prints various kinds of information, and the authorized-operation storing means executes: an external-use-history storing function that stores the external use history; a use-at-overtime-history storing function that stores the use-at-overtime history; and an information-printing-history storing function that stores the information printing history.

8. The equipment monitoring device according to any one of claims 1 to 7, wherein the authorized operation execution history includes: an application use history of applications used by the network constituent equipment in various kinds of applications installed in the network constituent equipment; a file access history when the network constituent equipment accesses a file stored in another network constituent equipment; a mail transmission history of electronic mails transmitted by the network constituent equipment; and an external access history when the network constituent equipment accesses the outside of the local area network, and the authorized-operation storing means executes: an application-use-history storing function that stores the application use history; a file-access-history storing function that stores the file access history; a mail-transmission-history storing function that stores the mail transmission history; and an external-access-history storing function that stores the external access history.

9. The equipment monitoring device according to any one of claims 1 to 8, wherein the equipment monitoring device has backup means for enabling use of an unusable application when any one of various applications installed in the network constituent equipments becomes unusable.

10. The equipment monitoring device according to any one of claims 1 to 9, wherein the equipment monitoring device sorts the authorized operation execution history and the unauthorized operation execution history in accordance with a predetermined period and outputs the authorized operation execution history and the unauthorized operation execution history sorted in accordance with the predetermined period through the output means.

11. The equipment monitoring device according to any one of claims 1 to 10, wherein the equipment monitoring device converts the authorized operation execution history and the unauthorized operation execution history to a spreadsheet and outputs the authorized operation execution history and the unauthorized operation execution history converted to the spreadsheet through the output means.
